# EUROPEAN PATENT APPLICATION

(11) **EP 4 848 408 A1**
(43) Date of publication of application: **02.12.2026**
(21) Application number: 24921644.1
(22) Date of filing: 19.11.2024
(51) Int. Cl.: H01M 10/613, H01M 10/617

(54) **THERMAL MANAGEMENT COMPONENT, BATTERY, AND ELECTRIC DEVICE**

(30) Priority: 30.01.2024 CN 202410130189
(71) Applicant: Contemporary Amperex Technology Co., Limited, Ningde, Fujian 352100 (CN)
(72) Inventor: WANG, Lei, Ningde, Fujian 352100 (CN); ZHANG, Kaiwen, Ningde, Fujian 352100 (CN); ZHOU, Linggang, Ningde, Fujian 352100 (CN); LIN, Jiubiao, Ningde, Fujian 352100 (CN)
(74) Representative: Gong, Jinping
(86) International application number: PCT/CN2024/133030
(87) International publication number: WO 2025/161622

(57) **Abstract**

This application discloses a thermal management component, a battery, and an electric device. The thermal management component has a liquid inlet flow channel, a first main flow channel, a second main flow channel, and a first group of flow channels and a second group of flow channels arranged side by side along a first direction; in a second direction, the first main flow channel has a first inlet end, and the second main flow channel has a second inlet end, the second direction intersecting the first direction; the first group of flow channels includes at least one first branch flow channel, and the first inlet end is in communication with the liquid inlet flow channel via the first group of flow channels. The second group of flow channels includes at least one second branch flow channel, and the second inlet end is in communication with the liquid inlet flow channel via the second group of flow channels; and along the second direction, a projection of the first group of flow channels falls within a projection of the first inlet end, and a projection of the second group of flow channels falls within a projection of the second inlet end. Along a liquid flow direction in the liquid inlet flow channel, the second group of flow channels is located downstream of the first group of flow channels, and a sum of cross-sectional areas of the second group of flow channels is greater than a sum of cross-sectional areas of the first group of flow channels.

## Description

### CROSS-REFERENCE TO RELATED APPLICATIONS

This application claims priority to Chinese patent application 202410130189.X, filed on January 30, 2024 and entitled "THERMAL MANAGEMENT COMPONENT, BATTERY, AND ELECTRIC DEVICE", which is incorporated herein by reference in its entirety.

### TECHNICAL FIELD

This application relates to the field of battery technology, and specifically, to a thermal management component, a battery, and an electric device.

### BACKGROUND

With the development of new energy technologies, application of batteries becomes increasingly widespread. Due to high energy density, high reliability, long service life, and environmental friendliness, batteries have been widely applied in passenger vehicles, commercial vehicles, electric bicycles, heavy-duty trucks, energy storage facilities, battery swap stations, engineering and manufacturing, intelligent devices, and the like. They also promote technological development and research in fields such as communication terminals, medical devices, and energy exploration.

In battery technology, excessively high or low temperature of a battery cell can lead to a decrease in the cycling performance of the battery cell, reducing the reliability of the battery. How to improve the cycle life of battery cells and enhance the reliability of batteries is an urgent problem to be solved in battery technology.

### SUMMARY

Embodiments of this application provide a thermal management component, a battery, and an electric device, which can improve the flow uniformity of the thermal management component, thereby enhancing the reliability of the battery.

According to a first aspect, an embodiment of this application provides a thermal management component, where the thermal management component has a liquid inlet flow channel, a first group of flow channels, a second group of flow channels, a first main flow channel, and a second main flow channel; where the first main flow channel and the second main flow channel are arranged side by side and spaced apart along a first direction; in a second direction, the first main flow channel has a first inlet end, and the second main flow channel has a second inlet end, the second direction intersecting the first direction; the first group of flow channels includes at least one first branch flow channel, and the first inlet end is in communication with the liquid inlet flow channel via the first group of flow channels; the second group of flow channels includes at least one second branch flow channel, and the second inlet end is in communication with the liquid inlet flow channel via the second group of flow channels; and along the second direction, a projection of the first group of flow channels falls within a projection of the first inlet end, and a projection of the second group of flow channels falls within a projection of the second inlet end; where along a liquid flow direction in the liquid inlet flow channel, the second group of flow channels is located downstream of the first group of flow channels, and a sum of cross-sectional areas of the second group of flow channels is greater than a sum of cross-sectional areas of the first group of flow channels.

In the above technical solution, the first group of flow channels connects the first main flow channel to the liquid inlet flow channel, and the first group of flow channels introduces liquid into the first main flow channel; and the second group of flow channels connects the second main flow channel to the liquid inlet flow channel, and the first group of flow channels introduces liquid into the second main flow channel. The second group of flow channels is located downstream of the first group of flow channels, and the sum of cross-sectional areas of the second group of flow channels is greater than the sum of cross-sectional areas of the first group of flow channels. This can increase the flow rate of liquid entering the second main flow channel, and reduce the difference between the liquid flow rate in the first main flow channel and the liquid flow rate in the second main flow channel. As a result, the distribution of the liquid flow rates to the first main flow channel and the second main flow channel becomes more uniform, and the liquid flow velocities in the first main flow channel and the second main flow channel become more comparable. This improves the flow uniformity of the thermal management component, enhances the heat exchange effect of the thermal management component, boosts the cycling performance of battery cells, and increases the reliability of the battery.

In some embodiments, the first branch flow channel is provided in a quantity of one, the second branch flow channel is provided in a quantity of one, and a cross-sectional area of the second branch flow channel is greater than a cross-sectional area of the first branch flow channel.

In the above technical solution, one first branch flow channel introduces liquid into the first main flow channel, and one second branch flow channel introduces liquid into the second main flow channel. The small number of first branch flow channels and second branch flow channels can reduce the preparation difficulty of the thermal management component.

In some embodiments, along the first direction, a width of the first branch flow channel is W₁, and a width of the second branch flow channel is W₂, satisfying 10 mm ≤ W₁ ≤ 20 mm, and 15 mm ≤ W₂ ≤ 25 mm.

In the above technical solution, 10 mm ≤ W₁ ensures that the first branch flow channel is not too narrow, alleviating the pressure drop of liquid in the first branch flow channel; W₁ ≤ 20 mm ensures that the first branch flow channel is not too wide and the liquid flow rate in the first branch flow channel 5a is not too high, helping improve the flow uniformity of the thermal management component. Therefore, 10 mm ≤ W₁ ≤ 20 mm can balance the pressure drop and flow uniformity of the thermal management component.

15 mm ≤ W₂ ensures that the second branch flow channel is not too narrow, alleviating the pressure drop of liquid in the second branch flow channel and allowing a larger liquid flow rate in the second branch flow channel; W₂ ≤ 25 mm ensures that the second branch flow channel is not too large, allowing for a thermal management component with a relatively small volume. Therefore, 15 mm ≤ W₂ ≤ 25 mm can balance the pressure drop and volume of the thermal management component.

In some embodiments, the first branch flow channel is provided in plurality, the plurality of first branch flow channels are spaced apart along the first direction, the second branch flow channel is provided in a quantity of one, and a cross-sectional area of the second branch flow channel is greater than a sum of cross-sectional areas of all the first branch flow channels.

In the above technical solution, liquid is introduced into the first main flow channel via a plurality of first branch flow channels, and liquid is introduced into the second main flow channel via one second branch flow channel, thereby improving the flow uniformity of the thermal management component.

In some embodiments, the first branch flow channel is provided in a quantity of one, the second branch flow channel is provided in plurality, the plurality of second branch flow channels are spaced apart along the first direction, and a sum of cross-sectional areas of all the second branch flow channels is greater than a cross-sectional area of the first branch flow channel.

In the above technical solution, liquid is introduced into the first main flow channel via one first branch flow channel, and liquid is introduced into the second main flow channel via a plurality of second branch flow channels, thereby improving the flow uniformity of the thermal management component.

In some embodiments, the first branch flow channel is provided in plurality, the plurality of first branch flow channels are spaced apart along the first direction, the second branch flow channel is provided in plurality, the plurality of second branch flow channels are spaced apart along the first direction, and a sum of cross-sectional areas of all the second branch flow channels is greater than a sum of cross-sectional areas of all the first branch flow channels.

In the above technical solution, liquid is introduced into the first main flow channel via a plurality of first branch flow channels, and liquid is introduced into the second main flow channel via a plurality of second branch flow channels. Both the first branch flow channel and the second branch flow channel are provided in plurality, which facilitates arrangement of the first branch flow channels and the second branch flow channels at different positions as needed, thereby improving the flow uniformity of the thermal management component and reducing the preparation difficulty of the thermal management component.

In some embodiments, the thermal management component has a liquid inlet port, where the liquid inlet port is provided at one end of the liquid inlet flow channel.

In some embodiments, the thermal management component further has a first communication flow channel, where along the first direction, the first communication flow channel is disposed between the first inlet end and the second inlet end, and separately communicates with the first inlet end and the second inlet end.

In the above technical solution, the first communication flow channel separately communicates with the first inlet end and the second inlet end, and the first communication flow channel can introduce liquid at the first inlet end of the first main flow channel into the second main flow channel. This can reduce the flow resistance, alleviate the pressure drop of liquid, and increase the total liquid flow rate in thermal management, thereby improving the heat exchange effect of the thermal management component.

In some embodiments, the thermal management component further has a third group of flow channels, where the third group of flow channels includes at least one third branch flow channel, and the first communication flow channel is in communication with the liquid inlet flow channel via the third group of flow channels; and along the second direction, a projection of the third group of flow channels falls within a projection of the first communication flow channel.

In the above technical solution, the first communication flow channel is in communication with the liquid inlet flow channel via the third group of flow channels, and the third branch flow channel can introduce liquid into the first communication flow channel. This can further reduce the flow resistance, alleviate the pressure drop of liquid, and increase the total liquid flow rate in thermal management, thereby improving the heat exchange effect of the thermal management component.

In some embodiments, a sum of cross-sectional areas of the third group of flow channels is greater than the sum of cross-sectional areas of the first group of flow channels, and the sum of cross-sectional areas of the third group of flow channels is less than the sum of cross-sectional areas of the second group of flow channels.

In the above technical solution, the cross-sectional area of the first group of flow channels, the cross-sectional area of the third group of flow channels, and the cross-sectional area of the second group of flow channels increase sequentially, so that along the liquid flow direction in the liquid inlet flow channel, the resistance experienced by the liquid decreases sequentially. This helps increase the total liquid flow rate in the thermal management component, thereby improving the heat exchange effect of the thermal management component.

In some embodiments, along the liquid flow direction in the liquid inlet flow channel, the liquid inlet flow channel includes a first upstream section located upstream of the first group of flow channels and a first downstream section located downstream of the first group of flow channels, where the second group of flow channels is connected to the first downstream section, and a cross-sectional area of the first downstream section is greater than the sum of cross-sectional areas of the first group of flow channels.

In the above technical solution, the cross-sectional area of the first downstream section is greater than the sum of cross-sectional areas of the first group of flow channels, so that compared to the first group of flow channels, liquid more easily enters the first downstream section and thereby flows into the second main flow channel via the second group of flow channels, further improving the flow uniformity of the thermal management component.

In some embodiments, a width of the first downstream section is W₃, satisfying 15 mm ≤ W₃ ≤ 25 mm.

In the above technical solution, 15 mm ≤ W₃ ensures that the first downstream section is not too narrow, alleviating the pressure drop of liquid in the first downstream section; W₃ ≤ 25 mm ensures that the first downstream section is not too wide, which can reduce the width of the first downstream section, allowing for a thermal management component with a relatively small volume. Therefore, 15 mm ≤ W₃ ≤ 25 mm can balance the pressure drop and volume of the thermal management component.

In some embodiments, the first downstream section extends along the first direction.

In the above technical solution, the first downstream section extends along the first direction, and the arrangement direction of the first main flow channel and the second main flow channel is the same as the extension direction of the first downstream section. This allows the first downstream section, the first main flow channel, and the second main flow channel to be arranged more compactly, allowing for a thermal management component with a relatively small volume and increasing the energy density of a battery using such thermal management component.

In some embodiments, the first upstream section is inclined relative to the first downstream section.

In the above technical solution, the first upstream section is inclined relative to the first downstream section so that the first upstream section and the first downstream section are arranged at an angle. In this way, in a case of the given length of the first upstream section and the given length of the first downstream section, the overall liquid inlet flow channel occupies relatively small dimensions in the first direction and the second direction. This allows for a thermal management component with a relatively small volume, and increases the energy density of a battery using such thermal management component.

In some embodiments, the first main flow channel has a first wall and a second wall opposite each other along the first direction, and the first inlet end is provided with a first flow disturbing member; where along the first direction, the first flow disturbing member is spaced from the first wall, and the first flow disturbing member is spaced from the second wall; and along the second direction, the first flow disturbing member is spaced from the first group of flow channels.

In the above technical solution, the first flow disturbing member can divert liquid at the first inlet end so that liquid first flows toward positions of the first wall and the second wall, alleviating the problem of uneven liquid flow velocities in the first main flow channel caused by the resistance from the first wall and the second wall to the liquid.

In some embodiments, the second main flow channel has a third wall and a fourth wall opposite each other along the first direction, and the second inlet end is provided with a second flow disturbing member; where along the first direction, the second flow disturbing member is spaced from the third wall, and the second flow disturbing member is spaced from the fourth wall; and along the second direction, the second flow disturbing member is spaced from the second group of flow channels.

In the above technical solution, the second flow disturbing member can divert liquid at the second inlet end so that liquid first flows toward positions of the third wall and the fourth wall, alleviating the problem of uneven liquid flow velocities in the second main flow channel caused by the resistance from the third wall and the fourth wall to the liquid.

In some embodiments, the thermal management component further has a liquid outlet flow channel, a fourth group of flow channels, a fifth group of flow channels, a third main flow channel, and a fourth main flow channel; where the third main flow channel and the fourth main flow channel are arranged side by side and spaced apart along the first direction; in the second direction, the third main flow channel has a third outlet end, and the fourth main flow channel has a fourth outlet end; the fourth group of flow channels includes at least one fourth branch flow channel, and the third outlet end is in communication with the liquid outlet flow channel via the fourth group of flow channels; the fifth group of flow channels includes at least one fifth branch flow channel, and the fourth outlet end is in communication with the liquid outlet flow channel via the fifth group of flow channels; and along the second direction, a projection of the fourth group of flow channels falls within a projection of the third outlet end, and a projection of the fifth group of flow channels falls within a projection of the fourth outlet end; where along a liquid flow direction in the liquid outlet flow channel, the fourth group of flow channels is located upstream of the fifth group of flow channels, and a sum of cross-sectional areas of the fourth group of flow channels is greater than a sum of cross-sectional areas of the fifth group of flow channels.

In the above technical solution, the fourth group of flow channels connects the third flow channel to the liquid outlet flow channel, and the fourth group of flow channels exports liquid from the third main flow channel; the fifth group of flow channels connects the fourth main flow channel to the liquid outlet flow channel, and the fifth group of flow channels exports liquid from the fourth main flow channel. The fifth group of flow channels is located downstream of the fourth group of flow channels, and the sum of cross-sectional areas of the fifth group of flow channels is greater than the sum of cross-sectional areas of the fourth group of flow channels. This can increase the flow rate of liquid flowing out from the fourth main flow channel, and reduce the difference between the liquid flow rate in the third main flow channel and the liquid flow rate in the fourth main flow channel. As a result, distribution of the liquid flow channels to the third main flow channel and the fourth main flow channel becomes more uniform, thereby further improving the flow uniformity of the thermal management component, enhancing the heat exchange effect of the thermal management component, boosting the cycling performance of battery cells, and increasing the reliability of the battery.

In some embodiments, the first main flow channel, the second main flow channel, the third main flow channel, and the fourth main flow channel are arranged in sequence along the first direction.

In the above technical solution, the first main flow channel, the second main flow channel, the third main flow channel, and the fourth main flow channel are arranged in sequence along the first direction. This can reduce the dimensional occupation of the flow channels in the second direction, and achieve a compact layout of the flow channels, allowing for a thermal management component with a relatively small volume, and increasing the energy density of a battery using such thermal management component.

In some embodiments, in the second direction, the first main flow channel has a first outlet end opposite the first inlet end, the second main flow channel has a second outlet end opposite the second inlet end, the third main flow channel has a third inlet end opposite the third outlet end, and the fourth main flow channel has a fourth inlet end opposite the fourth outlet end; and the thermal management component further has a second communication flow channel, where the second communication flow channel connects the first outlet end, the second outlet end, the third inlet end, and the fourth inlet end.

In the above technical solution, the first outlet end, the second outlet end, the third inlet end, and the fourth inlet end are separately in communication with the second communication flow channel, so that the second communication flow channel can gather liquid flowing out from the first main flow channel and the second main flow channel and divert the liquid to the third main flow channel and the fourth main flow channel, thereby balancing the liquid flow rates in the first main flow channel, the second main flow channel, the third main flow channel, and the fourth main flow channel. This further improves the flow uniformity of the thermal management component, enhances the heat exchange effect of the thermal management component, boosts the cycling performance of battery cells, and increases the reliability of the battery.

In some embodiments, the thermal management component has a liquid outlet port, where the liquid outlet port is provided at one end of the liquid outlet flow channel.

In some embodiments, the thermal management component further has a third communication flow channel, where along the first direction, the third communication flow channel is disposed between the third outlet end and the fourth outlet end, and separately communicates with the third outlet end and the fourth outlet end.

In the above technical solution, the third communication flow channel is in communication with the third outlet end and the fourth outlet end; and in addition to the fourth group of flow channels, the third communication flow channel can also export liquid from the third main flow channel. This can further reduce the flow resistance, alleviate the pressure drop of liquid, and increase the liquid flow rate in thermal management, thereby improving the heat exchange effect of the thermal management component.

In some embodiments, the thermal management component further has a sixth group of flow channels, where the sixth group of flow channels includes at least one sixth branch flow channel, and the third communication flow channel is in communication with the liquid outlet flow channel via the sixth group of flow channels; and along the second direction, a projection of the sixth group of flow channels falls within a projection of the third communication flow channel.

In the above technical solution, the third communication flow channel is in communication with the liquid outlet flow channel via the sixth group of flow channels, and the sixth group of flow channels can export liquid from the third communication flow channel. This can further reduce the flow resistance, alleviate the pressure drop of liquid, and increase the liquid flow rate in thermal management, thereby improving the heat exchange effect of the thermal management component.

In some embodiments, a sum of cross-sectional areas of the sixth group of flow channels is greater than the sum of cross-sectional areas of the fourth group of flow channels, and the sum of cross-sectional areas of the sixth group of flow channels is less than the sum of cross-sectional areas of the fifth group of flow channels.

In the above technical solution, the cross-sectional area of the fourth group of flow channels, the cross-sectional area of the sixth group of flow channels, and the cross-sectional area of the fifth group of flow channels increase sequentially, so that along the liquid flow direction in the liquid outlet flow channel, the resistance experienced by the liquid decreases sequentially. This helps increase the liquid flow rate in the thermal management component, and helps improve the flow uniformity of the thermal management component, thereby improving the heat exchange effect of the thermal management component.

In some embodiments, along the liquid flow direction in the liquid outlet flow channel, the liquid outlet flow channel includes a second upstream section located upstream of the fifth group of flow channels and a second downstream section located downstream of the fifth group of flow channels, where the fourth group of flow channels is connected to the second upstream section, and a cross-sectional area of the second upstream section is greater than the sum of cross-sectional areas of the fourth group of flow channels.

In the above technical solution, the cross-sectional area of the second downstream section is greater than the sum of cross-sectional areas of the fourth group of flow channels, so that compared to liquid in the fourth group of flow channels, liquid in the second upstream section experiences less pressure, and the second upstream section can alleviate the pressure drop, allowing for a thermal management component with an overall smaller pressure drop. This helps improve the heat exchange effect of the thermal management component.

In some embodiments, the third main flow channel has a fifth wall and a sixth wall opposite each other along the first direction, and the third outlet end is provided with a third flow disturbing member; where along the first direction, the third flow disturbing member is spaced from the fifth wall, and the third flow disturbing member is spaced from the sixth wall; and along the second direction, the third flow disturbing member is spaced from the fourth group of flow channels.

In the above technical solution, the third flow disturbing member can divert liquid at the third outlet end so that liquid first flows toward positions of the fifth wall and the sixth wall and thereby flows out of the third main flow channel, alleviating the problem of uneven liquid flow velocities in the third main flow channel caused by the resistance from the fifth wall and the sixth wall to the liquid.

In some embodiments, the fourth main flow channel has a seventh wall and an eighth wall opposite each other along the first direction, and the fourth outlet end is provided with a fourth flow disturbing member; where along the first direction, the fourth flow disturbing member is spaced from the seventh wall, and the fourth flow disturbing member is spaced from the eighth wall; and along the second direction, the fourth flow disturbing member is spaced from the fifth group of flow channels.

In the above technical solution, the fourth flow disturbing member can divert liquid at the fourth outlet end so that liquid first flows toward positions of the seventh wall and the eighth wall and thereby flows out of the fourth main flow channel, alleviating the problem of uneven liquid flow velocities in the fourth main flow channel caused by the resistance from the seventh wall and the eighth wall to the liquid.

According to a second aspect, an embodiment of this application provides a battery including the thermal management component according to any one of the embodiments of the first aspect.

According to a third aspect, an embodiment of this application provides an electric device including the battery according to any one of the embodiments of the second aspect, where the battery is configured to supply power to the electric device.

### BRIEF DESCRIPTION OF DRAWINGS

To describe the technical solutions in the embodiments of this application more clearly, the following briefly describes the accompanying drawings for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a schematic exploded view of a battery according to some embodiments of this application;
FIG. 3 is a schematic structural diagram of a thermal management component according to some embodiments of this application;
FIG. 4 is a schematic diagram of an internal structure of a thermal management component according to some embodiments of this application;
FIG. 5 is a schematic diagram of liquid flow directions in the thermal management component shown in FIG. 4;
FIG. 6 is a partial enlarged view of a thermal management component according to some embodiments of this application;
FIG. 7 is a schematic diagram of an internal structure of a thermal management component according to some other embodiments of this application;
FIG. 8 is a schematic diagram of liquid flow directions in the thermal management component shown in FIG. 7;
FIG. 9 is a schematic diagram of an internal structure of a thermal management component according to still some other embodiments of this application;
FIG. 10 is a schematic diagram of liquid flow directions in the thermal management component shown in FIG. 9;
FIG. 11 is a schematic diagram of an internal structure of a thermal management component according to yet some other embodiments of this application; and
FIG. 12 is a schematic diagram of liquid flow directions in the thermal management component shown in FIG. 11.

Reference signs: 300. thermal management component; 310. liquid inlet port; 320. liquid outlet port; 330. liquid inlet flow channel; 330a. first upstream section; 330b. first downstream section; 340. liquid outlet flow channel; 340a. second upstream section; 340b. second downstream section; 1. first main flow channel; 1a. first wall; 1b. second wall; 1c. first inlet end; 1d. first outlet end; 2. second main flow channel; 2a. third wall; 2b. fourth wall; 2c. second inlet end; 2d. second outlet end; 3. third main flow channel; 3a. fifth wall; 3b. sixth wall; 3d. third inlet end; 3c. third outlet end; 4. fourth main flow channel; 4a. seventh wall; 4b. eighth wall; 4d. fourth inlet end; 4c. fourth outlet end; 5. first group of flow channels; 5a. first branch flow channel; 6. second group of flow channels; 6a. second branch flow channel; 7. first communication flow channel; 8. second communication flow channel; 9. third communication flow channel; 350. third group of flow channels; 350a. third branch flow channel; 360. fourth group of flow channels; 360a. fourth branch flow channel; 370. fifth group of flow channels; 370a. fifth branch flow channel; 380. sixth group of flow channels; 380a. sixth branch flow channel; 410. first flow disturbing member; 420. second flow disturbing member; 430. third flow disturbing member; 440. fourth flow disturbing member; 450. fifth flow disturbing member; 100. battery; 10. battery cell; 20. box; 21. first portion; 22. second portion; 23. accommodation space; 1000. vehicle; 200. motor; 400. controller; Y. first direction; X. second direction; S1. liquid flow direction in liquid inlet flow channel; and S2. liquid flow direction in liquid outlet flow channel.

The drawings are not drawn to actual scale.

### DETAILED DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The phrase "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The term "or" in this application is merely an association relationship for describing associated objects, indicating that two relationships may be present. For example, A or B may mean: presence of only A; and presence of only B.

In the embodiments of this application, the same reference signs denote the same members. For brevity, in different embodiments, detailed descriptions of the same members are not repeated. It should be understood that as shown in the accompanying drawings, dimensions such as thickness, length, and width of various components and dimensions such as thickness, length, and width of integrated apparatuses in the embodiments of this application are merely for illustrative purposes and should not constitute any limitations on this application.

The term "a plurality of" in this application refers to two or more (including two).

In this application, a battery cell may include, but is not limited to, a lithium-ion secondary battery, a lithium-ion primary battery, a lithium-sulfur battery, a sodium-lithium-ion battery, a sodium-ion battery, or a magnesium-ion battery. The battery cell may be, but is not limited to, cylindrical, flat, cuboid, or of other shapes. Typically, in terms of the packaging method, battery cells are divided into cylindrical battery cells, prismatic battery cells, and pouch battery cells.

The battery cell includes an electrode assembly and an electrolyte. The electrode assembly includes a positive electrode plate, a negative electrode plate, and a separator. The battery cell functions mainly relying on migration of metal ions between the positive electrode plate and the negative electrode plate. Metal ions (for example, lithium ions) intercalate and deintercalate between the positive electrode and the negative electrode. The separator is disposed between the positive electrode and the negative electrode, preventing short circuits between the positive electrode plate and the negative electrode plate while allowing active ions to pass through.

The positive electrode plate includes a positive electrode current collector and a positive electrode active substance layer. The positive electrode active substance layer is applied on a surface of the positive electrode current collector. The part of the positive electrode current collector uncoated with the positive electrode active substance layer protrudes out of the part of the positive electrode current collector coated with the positive electrode active substance layer. The part of the positive electrode current collector uncoated with the positive electrode active substance layer serves as a positive electrode tab.

Taking a lithium-ion battery as an example, the positive electrode active substance may be lithium cobalt oxide, lithium iron phosphate, ternary lithium, lithium manganate, or the like. The positive electrode current collector may be a metal foil or a composite current collector. For example, as a metal foil, silver-plated aluminum, silver-plated stainless steel, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on the polymer material substrate (for example, a substrate of polypropylene, polyethylene terephthalate, polybutylene terephthalate, polystyrene, polyethylene, or the like).

The negative electrode plate includes a negative electrode current collector and a negative electrode active substance layer. The negative electrode active substance layer is applied on a surface of the negative electrode current collector. The part of the negative electrode current collector uncoated with the negative electrode active substance layer protrudes out of the part of the negative electrode current collector coated with the negative electrode active substance layer. The part of the negative electrode current collector uncoated with the negative electrode active substance layer serves as a negative electrode tab.

The negative electrode current collector may be a metal foil or a composite current collector. For example, as a metal foil, silver-plated aluminum, silver-plated stainless steel, stainless steel, copper, aluminum, nickel, carbon electrode, carbon, nickel, titanium, or the like may be used. The negative electrode active substance may be carbon, silicon, or the like.

To reduce the risk of electrode tab fusing caused by high current, a plurality of positive electrode tabs are provided and stacked together, and a plurality of negative electrode tabs are provided and stacked together. A material of the separator may be PP (polypropylene, polypropylene), PE (polyethylene, polyethylene), or the like. In addition, the electrode assembly may be a wound structure or a stacked structure.

The battery mentioned in the embodiments of this application refers to a single physical module including one or more battery cells to provide higher voltage and capacity. For example, the battery mentioned in this application may include a battery module, a battery pack, and the like. Typically, the battery includes a box for packaging one or more battery cells. The box can reduce the impact of liquid or other foreign matters on the charging or discharging of the battery cells.

In some embodiments, the battery may be a battery module. When there are a plurality of battery cells, the plurality of battery cells are arranged and fixed to form one battery module.

In some embodiments, the battery may be a battery pack, where the battery pack includes a box and a battery cell, the battery cell or battery module being accommodated in the box.

In some embodiments, a plurality of battery cells (cell) may first be integrated into at least one battery module (module), and then the battery modules are installed in the box to form a battery pack (pack). In this embodiment, auxiliary structural members such as cross beams may also be provided between the battery modules to improve the installation stability of the battery modules in the box.

In some embodiments, the box may be part of the chassis structure of a vehicle. For example, part of the box may become at least part of the floor of the vehicle, or part of the box may become at least part of the cross beam and longitudinal beam of the vehicle.

In some embodiments, the battery may be an energy storage apparatus. The energy storage apparatus includes an energy storage container, an energy storage cabinet, and the like.

The development of battery technology requires simultaneous consideration of multiple design factors, such as performance parameters like the energy density, cycle life, discharge capacity, and charge-discharge rate. Additionally, the reliability of the battery needs to be taken into account.

In battery technology, the cycling performance of a battery cell is related to the temperature of the battery cell. The excessively high temperature of the battery cell caused by heat generation during use of the battery cell, or the excessively high or low temperature of the battery cell caused by ambient temperature may degrade the cycling performance of the battery cell. Therefore, typically, a thermal management component is provided inside the battery to regulate the temperature of a plurality of battery cells, thereby maintaining the battery cells within a suitable temperature range.

Typically, a plurality of main flow channels for liquid flow are formed in the interior of the thermal management component. A main flow channel closer to the liquid inlet port exhibits a higher liquid flow rate and a faster flow velocity; a main flow channel farther from the liquid inlet port exhibits a lower liquid flow rate and a slower flow velocity. The uneven distribution of liquid flow rates in the main flow channels leads to poor flow uniformity of the thermal management component, inconsistent heat exchange effects at different positions of the thermal management component, and weak capability of the thermal management component to regulate the temperature of battery cells. This in turn impairs the cycle life of the battery cells and compromises the reliability of the battery.

In view of this, to alleviate the problem of uneven flow rates in the thermal management component affecting the battery reliability, this application provides a technical solution: a first group of flow channels is provided between a liquid inlet flow channel and a first main flow channel, a second group of flow channels is provided between a second main flow channel and a liquid inlet flow channel, the second group of flow channels is downstream of the first group of flow channels, and a sum of cross-sectional areas of the second group of flow channels is greater than a sum of cross-sectional areas of the first group of flow channels, thereby increasing the flow rate of liquid entering the second main flow channel, and reducing the difference between the liquid flow rate in the first main flow channel and the liquid flow rate in the second main flow channel. This allows for a more even distribution of the liquid flow rates to the first main flow channel and the second main flow channel more uniform, thereby improving the flow uniformity of the thermal management component, enhancing the heat exchange effect of the thermal management component, boosting the cycling performance of the battery cells, and increasing the reliability of the battery.

The thermal management component is a component for accommodating a heat exchange medium to regulate temperature of a plurality of battery cells. Regulating temperature refers to heating or cooling the plurality of battery cells. Accommodating a heat exchange medium means accommodating liquid in the flow channels of the thermal management component. In the case of cooling or lowering the temperature of the battery cells, the thermal management component is configured to accommodate a cooling medium to lower the temperature of the plurality of battery cells. In this case, the thermal management component may also be referred to as a cooling component, a cooling system, a cooling plate, or the like, and the liquid accommodated therein may also be referred to as a cooling medium or a cooling liquid, more specifically, a coolant or a cooling gas. In addition, the thermal management component may also be configured for heating to raise the temperature of the plurality of battery cells. Optionally, the liquid may be water, a mixture of water and ethylene glycol, or the like.

For convenience of description, the liquid mentioned hereinafter refers to a heat exchange medium.

The technical solutions disclosed in the embodiments of this application are applicable to, but not limited to, batteries and electric devices using batteries.

The electric device may be a vehicle, a mobile phone, a portable device, a laptop computer, a ship, a spacecraft, an electric toy, an electric tool, or the like. The vehicle may be a fuel vehicle, a gas vehicle, or a new energy vehicle, where the new energy vehicle may be a battery electric vehicle, a hybrid vehicle, an extended-range vehicle, or the like. The spacecraft includes an airplane, a rocket, a space shuttle, a spaceship, and the like. The electric toy includes a fixed or mobile electric toy, such as a game console, an electric toy car, an electric toy ship, or an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

For ease of description, the electric device being a vehicle is used as an example for description of the following embodiments.

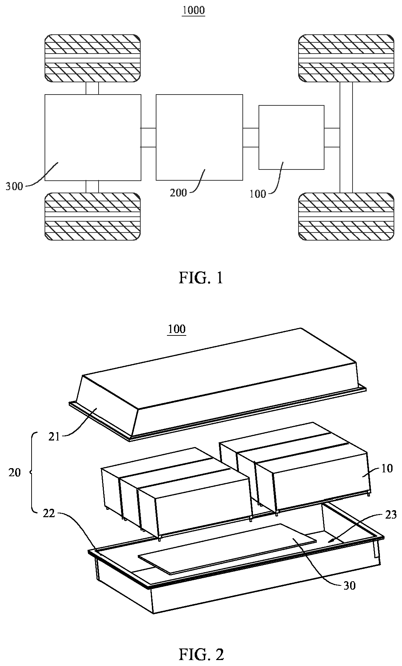

Referring to FIG. 1, FIG. 1 is a schematic structural diagram of a vehicle 1000 according to some embodiments of this application. A battery 100 is provided inside the vehicle 1000, and the battery 100 may be disposed at the bottom, front, or rear of the vehicle 1000. The battery 100 may be configured to supply power to the vehicle 1000. For example, the battery 100 may serve as an operational power source of the vehicle 1000.

The vehicle 1000 may further include a controller 400 and a motor 200, where the controller 400 is configured to control the battery 100 to supply power to the motor 200, for example, to satisfy power needs of start, navigation, and driving of the vehicle 1000.

In some embodiments of this application, the battery 100 may be used not only as an operational power source for the vehicle 1000 but also as a driving power source for the vehicle 1000, replacing or partially replacing fuel or natural gas to provide traction for the vehicle 1000.

In some embodiments, referring to FIG. 2, FIG. 2 is a schematic exploded view of a battery 100 according to some embodiments of this application. The battery 100 includes a plurality of battery cells 10 and a thermal management component 300. The plurality of battery cells 10 may be connected in series, parallel, or series-parallel, where being connected in series-parallel means a combination of series and parallel connections of the plurality of battery cells 10.

In some embodiments, the battery 100 may further include a busbar component (not shown in the figure), and the plurality of battery cells 10 may be electrically connected through the busbar component to implement series, parallel, or series-parallel connection of the plurality of battery cells 10.

The busbar component may be a metal conductor, such as copper, iron, aluminum, steel, or aluminum alloy.

In some embodiments, the battery 100 may further include a box 20, where the box 20 is configured to accommodate the battery cells 10. The box 20 may include a first portion 21 and a second portion 22, where the first portion 21 and the second portion 22 engage with each other to define an accommodation space 23 for accommodating the battery cells 10. Certainly, the joint between the first portion 21 and the second portion 22 may be sealed by a sealing element (not shown in the figure), and the sealing element may be a sealing ring, a sealant, or the like.

The first portion 21 and the second portion 22 may be of various shapes, such as a cuboid or a cylinder. The first portion 21 may be a hollow structure with one side open, the second portion 22 may also be a hollow structure with one side open, and the open side of the second portion 22 covers the open side of the first portion 21, forming the box 20 having the accommodation space 23. Certainly, the first portion 21 may be a hollow structure with one side open, the second portion 22 may be a plate-like structure, and the second portion 22 covers the open side of the first portion 21, forming the box 20 having the accommodation space 23.

Referring to FIG. 2, in some embodiments, the battery 100 further includes a thermal management component 300, where a flow channel is disposed in the interior of the thermal management component 300, the flow channel being configured for liquid to regulate the temperature of the battery cells 10. The thermal management component 300 may be configured to regulate the temperature of the battery cells 10 at the bottom of the battery cells 10. For example, as shown in FIG. 2, the thermal management component 300 is provided at the bottom of the battery cells 10, an upper surface of the thermal management component 300 is a heat exchange surface, and the thermal management component 300 performs heat exchange with the battery cells 10 through the upper surface. The thermal management component 300 may also be used between two adjacent battery cells 10, in which case two opposite surfaces in a thickness direction of the thermal management component 300 are heat exchange surfaces, and the thermal management component 300 may perform heat exchange with the battery cells 10 through the two heat exchange surfaces.

An embodiment of this application provides a thermal management component 300 that can solve the problem of poor flow uniformity of the thermal management component 300 affecting the reliability of the battery 100. The following describes a specific structure of the thermal management component 300 in detail with reference to the accompanying drawings.

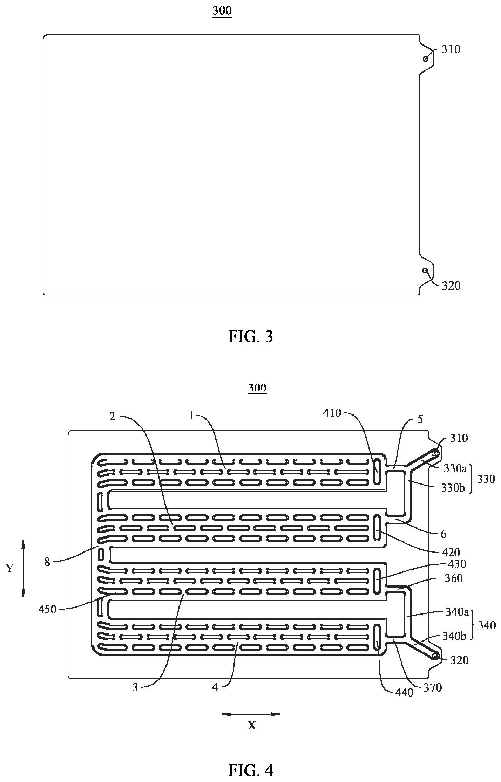

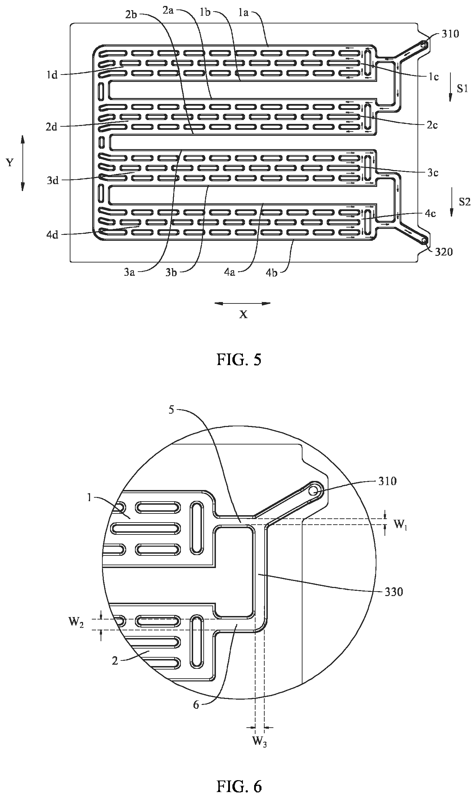

FIG. 3 is a schematic structural diagram of a thermal management component 300 according to some embodiments of this application; FIG. 4 is a schematic diagram of an internal structure of a thermal management component 300 according to some embodiments of this application; FIG. 5 is a schematic diagram of liquid flow directions in the thermal management component 300 shown in FIG. 4; and FIG. 6 is a partial enlarged view of a thermal management component 300 according to some embodiments of this application.

An embodiment of this application provides a thermal management component 300. Referring to FIGs. 3 to 6, the thermal management component 300 has a liquid inlet flow channel 330, a first group of flow channels 5, a second group of flow channels 6, a first main flow channel 1, and a second main flow channel 2. The first main flow channel 1 and the second main flow channel 2 are arranged side by side and spaced apart along a first direction Y. In a second direction X, the first main flow channel 1 has a first inlet end, and the second main flow channel 2 has a second inlet end 2c, the second direction X intersecting the first direction Y.

The first group of flow channels 5 includes at least one first branch flow channel 5a, and the first inlet end is in communication with the liquid inlet flow channel 330 via the first group of flow channels 5. The second group of flow channels 6 includes at least one second branch flow channel 6a, and the second inlet end 2c is in communication with the liquid inlet flow channel 330 via the second group of flow channels 6.

Along the second direction X, a projection of the first group of flow channels 5 falls within a projection of the first inlet end, and a projection of the second group of flow channels 6 falls within a projection of the second inlet end 2c. Along a liquid flow direction S1 in the liquid inlet flow channel, the second group of flow channels 6 is located downstream of the first group of flow channels 5, and a sum of cross-sectional areas of the second group of flow channels 6 is greater than a sum of cross-sectional areas of the first group of flow channels 5.

The thermal management component 300 may be of various shapes. The thermal management component 300 may be constructed as circular, rectangular, elliptical, irregular, or the like. For example, as shown in FIGs. 3 to 5, the thermal management component 300 is constructed as rectangular.

It should be understood that the liquid inlet flow channel 330, the first group of flow channels 5, the second group of flow channels 6, the first main flow channel 1, and the second main flow channel 2 are all flow channels for accommodating liquid in the thermal management component 300. The liquid inlet flow channel 330 is a flow channel configured for delivering liquid to the first main flow channel 1 and the second main flow channel 2. The liquid in the liquid inlet flow channel 330 entering the first main flow channel 1 and the second main flow channel 2 is also referred to as diversion.

It should be noted that in the thermal management component 300 according to the embodiments of this application, there may be a plurality of main flow channels in communication with the liquid inlet flow channel 330, that is, according to specific needs, in addition to the first main flow channel 1 and the second main flow channel 2, the thermal management component 300 may further have a third, fourth, or N-th main flow channel in communication with the liquid inlet flow channel 330. For example, as shown in FIGs. 4 and 5, the thermal management component 300 has two main flow channels in communication with the liquid inlet flow channel 330, namely the first main flow channel 1 and the second main flow channel 2, with the first main flow channel 1 located upstream of the second main flow channel 2.

The first main flow channel 1 and the second main flow channel 2 are arranged side by side along the first direction Y, and the first main flow channel 1 and the second main flow channel 2 are connected in parallel. The first main flow channel 1 and the second main flow channel 2 may be of various shapes, and the shapes of the first main flow channel 1 and the second main flow channel 2 may be the same or different. In the second direction X, the first main flow channel 1 and the second main flow channel 2 may extend in a curve, or the first main flow channel 1 and the second main flow channel 2 may extend in a straight line. For example, as shown in FIGs. 4 and 5, both the first main flow channel 1 and the second main flow channel 2 extend in a straight line.

Along the second direction X, the first main flow channel 1 has a first inlet end and a first outlet end 1d opposite each other, where liquid enters the first main flow channel 1 from the first inlet end and flows out of the first main flow channel 1 from the first outlet end 1d. Similarly, the second main flow channel 2 has a second inlet end 2c and a second outlet end 2d opposite each other, where liquid enters the first main flow channel 1 from the second inlet end 2c and flows out of the first main flow channel 1 from the second outlet end 2d.

The first inlet end is in communication with the liquid inlet flow channel 330 via the first group of flow channels 5, meaning that the first group of flow channels 5 connects the first inlet end to the liquid inlet flow channel 330. Understandably, the first group of flow channels 5 is located between the first inlet end and the liquid inlet flow channel 330, and liquid in the liquid inlet flow channel 330 passes through the first group of flow channels 5 before entering the first main flow channel 1. It can be understood that the cross-sectional area of the first group of flow channels 5 affects the liquid flow rate in the first main flow channel 1, and the liquid flow rate in the first main flow channel 1 is related to the size of the first group of flow channels 5.

The second inlet end 2c is in communication with the liquid inlet flow channel 330 via the second group of flow channels 6, meaning that the second group of flow channels 6 connects the second inlet end 2c to the liquid inlet flow channel 330. Understandably, the second group of flow channels 6 is located between the second inlet end 2c and the liquid inlet flow channel 330, and liquid in the liquid inlet flow channel 330 passes through the second group of flow channels 6 before entering the second main flow channel 2. It can be understood that the cross-sectional area of the second group of flow channels 6 affects the liquid flow rate in the second main flow channel 2, and the liquid flow rate in the second main flow channel 2 is related to the size of the second group of flow channels 6.

The first group of flow channels 5 includes at least one first branch flow channel 5a. Understandably, the first branch flow channel 5a may be provided in one or in plurality. If one first branch flow channel 5a is provided, the cross-sectional area of the first branch flow channel 5a is the sum of cross-sectional areas of the first group of flow channels 5; if one first branch flow channel 5a is provided, the sum of cross-sectional areas of the plurality of first branch flow channels 5a is the sum of cross-sectional areas of the first group of flow channels 5.

The second group of flow channels 6 includes at least one second branch flow channel 6a. Understandably, the second branch flow channel 6a may be provided in one or in plurality. If one second branch flow channel 6a is provided, the cross-sectional area of the second branch flow channel 6a is the sum of cross-sectional areas of the second group of flow channels 6; if a plurality of second branch flow channels 6a are provided, the sum of cross-sectional areas of the plurality of second branch flow channels 6a is the sum of cross-sectional areas of the second group of flow channels 6.

If a cross-section of the first branch flow channel 5a or the second branch flow channel 6a is rectangular, the length of the cross-section multiplied by its width is the cross-sectional area of the first branch flow channel 5a or the second branch flow channel 6a; if the cross-section of the first branch flow channel 5a or the second branch flow channel 6a is circular, the radius r corresponding to the circle is measured, and the cross-sectional area of the first branch flow channel 5a or the second branch flow channel 6a can be obtained according to the circle area calculation formula πr²; if the cross-section of the first branch flow channel 5a or the second branch flow channel 6a is irregular, the cross-sectional area of the first branch flow channel 5a or the second branch flow channel 6a can be obtained using the cutting and complementing method or an area measuring instrument.

The thermal management component 300 may be integrally formed, or the thermal management component 300 may be fabricated as a separate part. Optionally, the thermal management component 300 is fabricated as a separate part. Specifically, the thermal management component 300 includes a first plate body and a second plate body that are stacked, a side of the first plate body facing the second plate body is stamped to form a groove, and the first plate body covers the groove to form a flow channel for accommodating liquid.

Since the first main flow channel 1 is located upstream of the second main flow channel 2, usually the liquid flow rate in the first main flow channel 1 is greater than the liquid flow rate in the second main flow, leading to uneven flow rates in the thermal management component 300. To balance the liquid flow rate in the first main flow channel 1 and the second flow channel, the cross-sectional area of the second group of flow channels 6 needs to be greater than the cross-sectional area of the first group of flow channels 5. A larger cross-sectional area of the flow channel indicates a higher liquid flow rate at that location, as well as a higher liquid flow rate.

In this embodiment, the first group of flow channels 5 connects the first main flow channel 1 to the liquid inlet flow channel 330, and the first group of flow channels 5 introduces liquid into the first main flow channel 1; and the second group of flow channels 6 connects the second main flow channel 2 to the liquid inlet flow channel 330, and the first group of flow channels 5 introduces liquid into the second main flow channel 2. The second group of flow channels 6 is located downstream of the first group of flow channels 5, and the sum of cross-sectional areas of the second group of flow channels 6 is greater than the sum of cross-sectional areas of the first group of flow channels 5. This can increase the liquid flow rate in the second main flow channel 2, increase the flow rate of liquid entering the second main flow channel 2, and reduce the difference between the liquid flow rate in the first main flow channel 1 and the liquid flow rate in the second main flow channel 2, allowing for a more uniform distribution of the liquid flow rates to the first main flow channel 1 and the second main flow channel 2. This in turn improves the flow uniformity of the thermal management component 300, enhances the heat exchange effect of the thermal management component 300, boosts the cycling performance of the battery cells 10, and increases the reliability of the battery 100.

In some embodiments, the first direction Y may be perpendicular to the second direction X.

The following describes in detail the specific implementation in which the sum of cross-sectional areas of the second group of flow channels 6 is greater than the sum of cross-sectional areas of the first group of flow channels 5.

Referring to FIGs. 4 and 5, in some embodiments, the first branch flow channel 5a is provided in a quantity of one, the second branch flow channel 6a is provided in a quantity of one, and a cross-sectional area of the second branch flow channel 6a is greater than a cross-sectional area of the first branch flow channel 5a.

Understandably, in this embodiment, the cross-sectional area of the first branch flow channel 5a is the sum of cross-sectional areas of the first group of flow channels 5, and the cross-sectional area of the second branch flow channel 6a is the sum of cross-sectional areas of the second group of flow channels 6.

In a case that a depth of the first branch flow channel 5a and a depth of the second branch flow channel 6a are equal, a width of the second branch flow channel 6a can be controlled to be greater than a width of the first branch flow channel 5a, thereby realizing that the sum of cross-sectional areas of the second group of flow channels 6 is greater than the sum of cross-sectional areas of the first group of flow channels 5. The depth of the first flow channel is a depth of the first flow channel in the thickness direction of the thermal management component 300, and the thickness direction of the thermal management component 300 is a direction perpendicular to a plane formed by the first direction Y and the second direction X.

Certainly, in a case that the width of the first branch flow channel 5a and the width of the second branch flow channel 6a are equal, the depth of the second branch flow channel 6a can be controlled to be greater than the depth of the first branch flow channel 5a, thereby realizing that the sum of cross-sectional areas of the second group of flow channels 6 is greater than the sum of cross-sectional areas of the first group of flow channels 5.

In this embodiment, one first branch flow channel 5a introduces liquid into the first main flow channel 1, and one second branch flow channel 6a introduces liquid into the second main flow channel 2. By making the cross-sectional area of the second branch flow channel 6a greater than the cross-sectional area of the first branch flow channel 5a, the sum of cross-sectional areas of the second group of flow channels 6 is greater than the sum of cross-sectional areas of the first branch flow channels 5a. A smaller number of second branch flow channels 6a can reduce the preparation difficulty of the thermal management component 300.

Referring to FIG. 6, in some embodiments, in a case that the first branch flow channels 5a is provided in a quantity of one and the second branch flow channel 6a is provided in a quantity of one, along the first direction Y, a width of the first branch flow channel 5a is W₁, and a width of the second branch flow channel 6a is W₂, satisfying 10 mm ≤ W₁ ≤ 20 mm.

10 mm ≤ W₁ ensures that the first branch flow channel 5a is not too narrow, alleviating the pressure drop of liquid in the first branch flow channel 5a; W₁ ≤ 20 mm ensures that the first branch flow channel 5a is not too wide and the liquid flow rate in the first branch flow channel 5a is not too high, helping improve the flow uniformity of the thermal management component 300. Therefore, 10 mm ≤ W₁ ≤ 20 mm can balance the pressure drop and flow uniformity of the thermal management component 300.

For example, W1 may be 10 mm, 12 mm, 14 mm, 16 mm, 17 mm, 19 mm, 20 mm, and any value therebetween.

Referring to FIG. 6, in some embodiments, 15 mm ≤ W₂ ≤ 25 mm is satisfied.

15 mm ≤ W₂ ensures that the second branch flow channel 6a is not too narrow, alleviating the pressure drop of liquid in the second branch flow channel 6a and allowing a larger liquid flow rate in the second branch flow channel 6a; W₂ ≤ 25 mm ensures that the second branch flow channel 6a is not too large, allowing for a thermal management component 300 with a relatively small volume. Therefore, 15 mm ≤ W₂ ≤ 25 mm can balance the pressure drop and volume of the thermal management component 300.

For example, W₂ may be 15 mm, 17 mm, 19 mm, 22 mm, 23 mm, 24 mm, 25 mm, and any value therebetween.

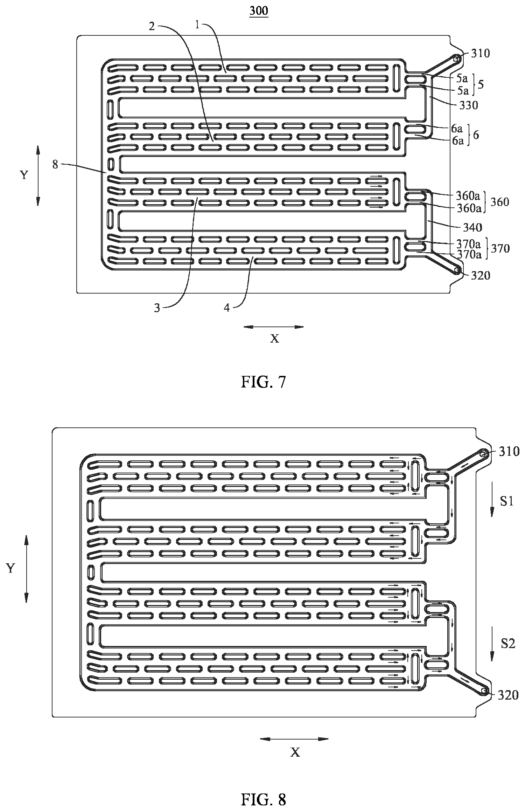

Referring to FIGs. 7 and 8, FIG. 7 is a schematic diagram of an internal structure of a thermal management component 300 according to some other embodiments of this application; and FIG. 8 is a schematic diagram of liquid flow directions in the thermal management component 300 shown in FIG. 7. In some other embodiments, the first branch flow channels 5a is provided in plurality, and the plurality of first branch flow channels 5a are spaced apart along the first direction Y. The second branch flow channel 6a is provided in plurality, the plurality of second branch flow channels 6a are spaced apart along the first direction Y, and a sum of cross-sectional areas of all the second branch flow channels 6a is greater than a sum of cross-sectional areas of all the first branch flow channels 5a.

In other words, both the first branch flow channel 5a and the second branch flow channel 6a are provided in plurality. The first branch flow channel 5a may be provided in a quantity of two, three, four, or the like. The second branch flow channel 6a may be provided in a quantity of two, three, four, or the like. It should be noted that the quantity of the first branch flow channels 5a and the quantity of the second branch flow channels 6a may be the same or different. For example, in FIGs. 7 and 8, the quantity of the first branch flow channels 5a and the quantity of the second branch flow channels 6a are both two.

The areas of the plurality of first branch flow channels 5a are added to obtain the sum of cross-sectional areas of the first group of branch flow channels. The areas of the plurality of second branch flow channels 6a are added to obtain the sum of cross-sectional areas of the second group of branch flow channels.

In this embodiment, liquid is introduced into the first main flow channel 1 via a plurality of first branch flow channels 5a, and liquid is introduced into the second main flow channel 2 via a plurality of second branch flow channels 6a. Both the first branch flow channel 5a and the second branch flow channel 6a are provided in plurality, which facilitates arrangement of the first branch flow channels 5a and the second branch flow channels 6a at different positions as needed, thereby improving the flow uniformity of the thermal management component 300 and reducing the preparation difficulty of the thermal management component 300.

In still some other embodiments, the first branch flow channel 5a is provided in plurality, the plurality of first branch flow channels 5a are spaced apart along the first direction Y, the second branch flow channel 6a is provided in a quantity of one, and a cross-sectional area of the second branch flow channel 6a is greater than a sum of cross-sectional areas of all the first branch flow channels 5a.

The widths of the plurality of first branch flow channels 5a may be the same or different, and the widths of the plurality of second branch flow channels 6a may be the same or different.

In this embodiment, liquid is introduced into the first main flow channel 1 via a plurality of first branch flow channels 5a, and liquid is introduced into the second main flow channel 2 via one second branch flow channel 6a, thereby improving the flow uniformity of the thermal management component 300.

In yet some other embodiments, the first branch flow channel 5a is provided in a quantity of one, the second branch flow channel 6a is provided in a plurality, the plurality of second branch flow channels 6a are spaced apart along the first direction Y, and a sum of cross-sectional areas of all the second branch flow channels 6a is greater than a cross-sectional area of the first branch flow channel 5a.

In this embodiment, liquid is introduced into the first main flow channel 1 via one first branch flow channel 5a, and liquid is introduced into the second main flow channel 2 via a plurality of second branch flow channels 6a, thereby improving the flow uniformity of the thermal management component 300.

The above embodiments illustrate some specific implementations in which the sum of cross-sectional areas of the second group of flow channels 6 is greater than the sum of cross-sectional areas of the first group of flow channels 5.

Referring to FIGs. 4 and 5, in some embodiments, the thermal management component 300 further has a liquid inlet port 310, where the liquid inlet port 310 is provided at one end of the liquid inlet flow channel 330.

Since the second group of flow channels 6 is located upstream of the first group of flow channels 5, compared to the second group of flow channels 6, the first group of flow channels 5 is closer to the liquid inlet port 310.

For example, as shown in FIGs. 4 and 5, the liquid inlet port 310 is provided above the liquid inlet flow channel 330, and the first main flow channel 1 is provided above the second main flow channel 2.

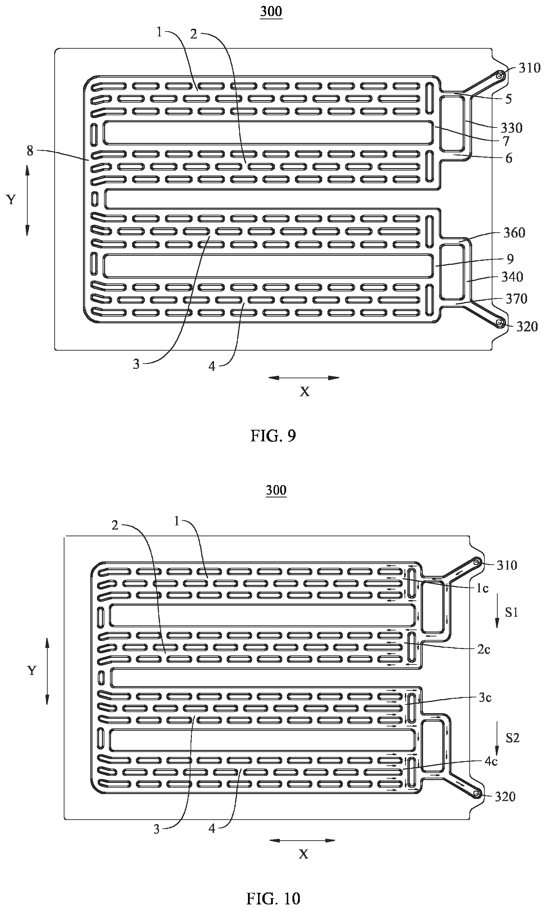

Referring to FIGs. 9 and 10, FIG. 9 is a schematic diagram of an internal structure of a thermal management component 300 according to still some other embodiments of this application; and FIG. 10 is a schematic diagram of liquid flow directions in the thermal management component 300 shown in FIG. 9. In some embodiments, the thermal management component 300 further has a first communication flow channel 7, where along the first direction Y, the first communication flow channel 7 is disposed between the first inlet end and the second inlet end 2c, and separately communicates with the first inlet end and the second inlet end 2c.

For example, as shown in FIGs. 9 and 10, along the first direction Y, the first communication flow channel 7 is located between the first main flow channel 1 and the second main flow channel 2, and the first communication flow channel 7 extends along the first direction Y.

In this embodiment, the first communication flow channel 7 separately communicates with the first inlet end and the second inlet end 2c. In addition to the second group of flow channels 6, liquid can also enter the second main flow channel 2 via the first communication flow channel 7. This can reduce the flow resistance, alleviate the pressure drop of liquid, and increase the liquid flow rate in thermal management, thereby improving the heat exchange effect of the thermal management component 300.

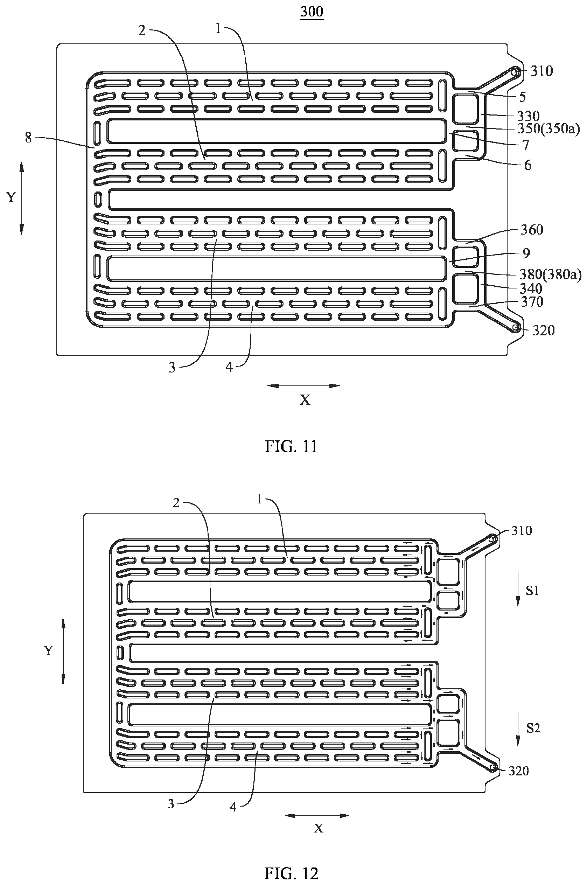

FIG. 11 is a schematic diagram of an internal structure of a thermal management component 300 according to yet some other embodiments of this application; and FIG. 12 is a schematic diagram of liquid flow directions in the thermal management component 300 shown in FIG. 11.

Referring to FIGs. 11 and 12, in some embodiments, the thermal management component 300 further has a third group of flow channels 350, where the third group of flow channels 350 includes at least one third branch flow channel 350a, and the first communication flow channel 7 is in communication with the liquid inlet flow channel 330 via the third group of flow channels 350; and along the second direction X, a projection of the third group of flow channels 350 falls within a projection of the first communication flow channel 7.

Understandably, the third group of flow channels 350 connects the first communication flow channel 7 to the liquid inlet flow channel 330, and the third group of flow channels 350 can introduce liquid into the first communication flow channel 7. That is, not only the first group of flow channels 5 and the second group of flow channels 6 can divert from the liquid inlet flow channel 330, but also the third group of flow channels 350 can divert from the liquid inlet flow channel 330.

The third branch flow channel 350a may be provided in one or in plurality.

For example, as shown in FIGs. 11 and 12, one third branch flow channel 350a is provided, and the third branch flow channel 350a extends along the second direction X. With addition of the third group of flow channels 350, some of the liquid in the first communication flow channel 7 can enter the first main flow channel 1 and some enter the second main flow channel 2.

In this embodiment, the first communication flow channel 7 is in communication with the liquid inlet flow channel 330 via the third group of flow channels 350, and the third branch flow channel 350a can introduce liquid into the first communication flow channel 7. This can further reduce the flow resistance, alleviate the pressure drop of liquid, and increase the total liquid flow rate in thermal management, thereby improving the heat exchange effect of the thermal management component 300.

For convenience of flow channel arrangement, in some embodiments, the first group of flow channels 5, the second group of flow channels 6, and the third group of flow channels 350 are parallel to each other and all extend along the second direction X.

In some embodiments, a sum of cross-sectional areas of the third group of flow channels 350 is greater than the sum of cross-sectional areas of the first group of flow channels 5, and the sum of cross-sectional areas of the third group of flow channels 350 is less than the sum of cross-sectional areas of the second group of flow channels 6.

If one third branch flow channel 350a is provided, the cross-sectional area of the third branch flow channel 350a is the sum of cross-sectional areas of the third group of flow channels 350. If a plurality of third branch flow channels 350a are provided, the sum of cross-sectional areas of the plurality of third branch flow channels 350a is the sum of cross-sectional areas of the third group of flow channels 350. For example, in FIGs. 11 and 12, one third branch flow channel 350a is provided.

The cross-sectional area of the third branch flow channel 350a can be measured using the same measurement method as that for the first branch flow channel 5a and the second branch flow channel 6a. For brevity, details are not repeated herein.

Understandably, the cross-sectional areas of the first group of flow channels, the third group of flow channels, and the second group of flow channels increase sequentially. Thus, along the liquid flow direction S1 in the liquid inlet flow channel, the resistance experienced by the liquid decreases sequentially. This helps increase the total liquid flow rate in the thermal management component 300, thereby improving the heat exchange effect of the thermal management component 300.

Referring to FIGs. 4 and 5, in some embodiments, along the liquid flow direction S1 in the liquid inlet flow channel, the liquid inlet flow channel 330 includes a first upstream section 330a located upstream of the first group of flow channels 5 and a first downstream section 330b located downstream of the first group of flow channels 5, where the second group of flow channels 6 is connected to the first downstream section 330b, and a cross-sectional area of the first downstream section 330b is greater than the sum of cross-sectional areas of the first group of flow channels 5.

The first upstream section 330a and the first downstream section 330b may be arranged along the first direction Y to form a straight liquid inlet flow channel 330. The first upstream section 330a and the first downstream section 330b may alternatively be arranged at an angle (as shown in FIGs. 11 and 12).

In this embodiment, the cross-sectional area of the first downstream section 330b is greater than the sum of cross-sectional areas of the first group of flow channels 5, alleviating the pressure drop of liquid in the first downstream section 330b. Moreover, compared to the first group of flow channels 5, liquid more easily enters the first downstream section 330b and thereby flows into the second main flow channel 2 via the second group of flow channels 6, further improving the flow uniformity of the thermal management component 300.

Referring to FIG. 6, in some embodiments, a width of the first downstream section 330b is W₃, satisfying 15 mm ≤ W₃ ≤ 25 mm.

15 mm ≤ W₃ ensures that the first downstream section 330b is not too narrow, alleviating the pressure drop of liquid in the first downstream section 330b; W₃ ≤ 25 mm ensures that the first downstream section 330b is not too wide, which can reduce the width of the first downstream section 330b, allowing for a thermal management component 300 with a relatively small volume. Therefore, 15 mm ≤ W₃ ≤ 25 mm can balance the pressure drop and volume of the thermal management component 300.

For example, W₃ may be 15 mm, 16 mm, 17 mm, 19 mm, 20 mm, 22 mm, 24 mm, 25 mm, or any value therebetween.

In some embodiments, the liquid inlet port 310 is provided at an end of the first upstream section 330a far away from the first downstream section 330b.

In some embodiments, a cross-sectional area of the first upstream section 330a is greater than the cross-sectional area of the first downstream section 330b, and the cross-sectional area of the first downstream section 330b is greater than the sum of cross-sectional areas of the first group of flow channels 5. Thus, the larger cross-sectional area of the first upstream section 330a can alleviate the pressure drop of liquid near the liquid inlet port 310, thereby increasing the total liquid flow rate in the thermal management component 300 and improving the heat exchange effect of the thermal management component 300.

In some embodiments, the first downstream section 330b extends along the first direction Y.

The first downstream section 330b may extend in a straight line, or the first downstream section 330b may extend in a curved manner.

The first downstream section 330b extends along the first direction Y, and the arrangement direction of the first main flow channel 1 and the second main flow channel 2 is the same as the extension direction of the first downstream section 330b. This allows the first downstream section 330b, the first main flow channel 1, and the second main flow channel 2 to be arranged more compactly, thereby reducing the volume of the thermal management component 300 and increasing the energy density of the battery 100 using the thermal management component 300.

In some embodiments, the first upstream section 330a is inclined relative to the first downstream section 330b.

Understandably, the first upstream section 330a and the first downstream section 330b are arranged at an angle. For example, as shown in FIGs. 4 and 5, the first upstream section 330a and the first downstream section 330b are arranged at an obtuse angle.

In this embodiment, the first upstream section 330a is inclined relative to the first downstream section 330b so that the first upstream section 330a and the first downstream section 330b are arranged at an angle. In this way, in a case of the given length of the first upstream section 330a and the given length of the first downstream section 330b are fixed, the overall liquid inlet flow channel 330 occupies relatively small dimensions in the first direction Y and the second direction X. This allows for a thermal management component 300 with a relatively small volume, and increases the energy density of the battery 100 using the thermal management component 300.

Referring to FIGs. 4 and 5, in some embodiments, the first main flow channel 1 has a first wall 1a and a second wall 1b opposite each other along the first direction Y, and the first inlet end is provided with a first flow disturbing member 410. Along the first direction Y, the first flow disturbing member 410 is spaced from the first wall 1a, and the first flow disturbing member 410 is spaced from the second wall 1b; and along the second direction X, the first flow disturbing member 410 is spaced from the first group of flow channels 5.

In a case that the thermal management component 300 is fabricated with a first plate body and a second plate body as separate parts and the second plate body covers a groove stamped on the first plate body to form a flow channel, the first wall 1a and the second wall 1b are two groove walls of the groove in a region corresponding to the first main flow channel 1, and the first flow disturbing member 410 is spaced from the two groove walls of the groove.

For convenience of description, the first wall 1a and the second wall 1b are hereinafter referred to as edges of the first main flow channel 1, and a position between the first wall 1a and the second wall 1b along the first direction Y is the middle of the first main flow channel 1. When liquid flows in the first main flow channel 1, the first wall 1a and the second wall 1b cause resistance to liquid flow, which leads to low flow velocity and low flow rate at the edges of the first main flow channel 1, a flow velocity difference between the middle of the first main flow channel 1 and the edges of the first flow channel, and uneven liquid flow velocities in the first main flow channel 1, affecting the flow uniformity of the thermal management component 300.

In this embodiment, the first flow disturbing member 410 can divert liquid at the first inlet end so that liquid first flows toward positions of the first wall 1a and the second wall 1b, alleviating the problem of uneven liquid flow velocities in the first main flow channel 1 caused by the resistance from the first wall 1a and the second wall 1b to the liquid.

The above embodiment alleviates the problem of uneven flow velocities in the first main flow channel 1 through the first flow disturbing member 410. In addition to the first main flow channel 1, similarly, the second main flow channel 2 also has the problem of uneven flow velocities. To alleviate the problem of uneven flow velocities in the second main flow channel 2, in some embodiments, still referring to FIGs. 4 and 5, the second main flow channel 2 has a third wall 2a and a fourth wall 2b opposite each other along the first direction Y, and the second inlet end 2c is provided with a second flow disturbing member 420. Along the first direction Y, the second flow disturbing member 420 is spaced from the third wall 2a, and the second flow disturbing member 420 is spaced from the fourth wall 2b. Along the second direction X, the second flow disturbing member 420 is spaced from the second group of flow channels 6.

The second flow disturbing member 420 has the same function as the first flow disturbing member 410. For brevity, details are not repeated herein.

In this embodiment, the second flow disturbing member 420 can divert liquid at the second inlet end 2c so that liquid first flows toward positions of the third wall 2a and the fourth wall 2b, alleviating the problem of uneven liquid flow velocities in the second main flow channel 2 caused by the resistance from the third wall 2a and the fourth wall 2b to the liquid.

To further improve the flow uniformity of the thermal management component 300, in some embodiments, still referring to FIGs. 4 and 5, the thermal management component 300 further has a liquid outlet flow channel 340, a fourth group of flow channels 360, a fifth group of flow channels 370, a third main flow channel 3, and a fourth main flow channel 4.

The third main flow channel 3 and the fourth main flow channel 4 are arranged side by side and spaced apart along the first direction Y. In the second direction X, the third main flow channel 3 has a third outlet end 3c, and the fourth main flow channel 4 has a fourth outlet end 4c.

The fourth group of flow channels 360 includes at least one fourth branch flow channel 360a, and the third outlet end 3c is in communication with the liquid outlet flow channel 340 via the fourth group of flow channels 360. The fifth group of flow channels 370 includes at least one fifth branch flow channel 370a, and the fourth outlet end 4c is in communication with the liquid outlet flow channel 340 via the fifth group of flow channels 370. Along the second direction X, a projection of the fourth group of flow channels 360 falls within a projection of the third outlet end 3c, and a projection of the fifth group of flow channels 370 falls within a projection of the fourth outlet end 4c.

Along a liquid flow direction S2 in the liquid outlet flow channel, the fourth group of flow channels 360 is located upstream of the fifth group of flow channels 370, and a sum of cross-sectional areas of the fourth group of flow channels 360 is greater than a sum of cross-sectional areas of the fifth group of flow channels 370.

As shown in FIGs. 4 and 5, along the second direction X, the third main flow channel 3 has a third inlet end 3d and a third outlet end 3c opposite each other, and liquid enters the third main flow channel 3 from the third inlet end 3d and flows out of the third main flow channel 3 from the third outlet end 3c. Similarly, along the second direction X, the fourth main flow channel 4 has a fourth inlet end 4d and a fourth outlet end 4c opposite each other, and liquid enters the fourth main flow channel 4 from the fourth inlet end 4d and flows out of the fourth main flow channel 4 from the fourth outlet end 4c.

The third outlet end 3c is in communication with the liquid outlet flow channel 340 via the fourth group of flow channels 360. Understandably, the fourth group of flow channels 360 is located between the third outlet end 3c and the liquid outlet flow channel 340, the fourth group of flow channels 360 connects the third outlet end 3c to the liquid outlet flow channel 340, and liquid in the third main flow channel 3 passes through the fourth group of flow channels 360 before entering the liquid outlet flow channel 340. It can be understood that the cross-sectional area of the fourth group of flow channels 360 affects the liquid flow rate in the third main flow channel 3, and the liquid flow rate in the third main flow channel 3 is related to the size of the fourth group of flow channels 360.

The fourth outlet end 4c is in communication with the liquid outlet flow channel 340 via the fifth group of flow channels 370. Understandably, the fifth group of flow channels 370 is located between the fourth outlet end 4c and the liquid outlet flow channel 340, the fifth group of flow channels 370 connects the fourth outlet end 4c to the liquid outlet flow channel 340, and liquid in the fourth main flow channel 4 passes through the fifth group of flow channels 370 before entering the liquid outlet flow channel 340. It can be understood that the cross-sectional area of the fifth group of flow channels 370 affects the liquid flow rate in the fourth main flow channel 4, and the liquid flow rate in the fourth main flow channel 4 is related to the size of the fifth group of flow channels 370.

The fourth group of flow channels 360 includes at least one fourth branch flow channel 360a. Understandably, the fourth branch flow channel 360a may be provided in one or in plurality. If one fourth branch flow channel 360a is provided (as shown in FIGs. 4 and 5), a cross-sectional area of the fourth branch flow channel 360a is the sum of cross-sectional areas of the fourth group of flow channels 360; if a plurality of fourth branch flow channels 360a are provided (as shown in FIGs. 7 and 8), a sum of cross-sectional areas of the plurality of fourth branch flow channels 360a is the sum of cross-sectional areas of the first group of flow channels 5.

The fifth group of flow channels 370 includes at least one fifth branch flow channel 370a. Understandably, the fifth branch flow channel 370a may be provided in one or in plurality. If one fifth branch flow channel 370a is provided (as shown in FIGs. 4 and 5), a cross-sectional area of the fifth branch flow channel 370a is the sum of cross-sectional areas of the fifth group of flow channels 370; if a plurality of fifth branch flow channels 370a are provided (as shown in FIGs. 7 and 8), a sum of cross-sectional areas of the plurality of fifth branch flow channels 370a is the sum of cross-sectional areas of the fifth group of flow channels 370.

The sum of cross-sectional areas of the fourth group of flow channels 360 is greater than the sum of cross-sectional areas of the fifth group of flow channels 370, that is, the total sum of cross-sectional areas of all the fourth branch flow channels 360a is greater than the total sum of cross-sectional areas of all the fifth branch flow channels 370a.

It should be noted that depending on specific arrangement requirements, the relative positions of the third main flow channel 3 and the fourth main flow channel 4 with respect to the first main flow channel 1 and the second main flow channel 2 vary, and the relative positions of the liquid outlet flow channel 340 and the liquid inlet flow channel 330 also vary. Therefore, the liquid flow direction S2 in the liquid outlet flow channel may be the same as the liquid flow channel direction S1 in the liquid inlet flow channel, or the liquid flow direction S2 in the liquid outlet flow channel may be different from the liquid flow channel direction S1 in the liquid inlet flow channel. For example, as shown in FIGs. 4 and 5, the liquid outlet flow channel 340 and the liquid inlet flow channel 330 are arranged on a same side of the thermal management component 300 in the second direction X, and the liquid flow direction S2 in the liquid outlet flow channel is the same as the liquid flow channel direction S1 in the liquid inlet flow channel.

The cross-sectional areas of the fourth branch flow channel 360a and the fifth branch flow channel 370a can be measured using the same measurement method as that for the cross-sections of the first branch flow channel 5a and the second branch flow channel 6a. For brevity, details are not repeated herein.

Since the fourth group of flow channels 360 is located upstream of the fifth group of flow channels 370, and the third main flow channel 3 is located upstream of the fourth main flow channel 4, usually there is also a problem of uneven flow rates between the third main flow channel 3 and the fourth main flow channel 4, with the liquid flow rate in the third main flow channel 3 being greater than the liquid flow rate in the fourth main flow channel 4. Therefore, it is necessary to balance the liquid flow rates in the third main flow channel 3 and the fourth main flow channel 4.

In this embodiment, the fourth group of flow channels 360 connects the third flow channel to the liquid outlet flow channel 340, and the fourth group of flow channels 360 can export liquid from the third main flow channel 3; and the fifth group of flow channels 370 connects the fourth main flow channel 4 to the liquid outlet flow channel 340, and the fifth group of flow channels 370 can export liquid from the fourth main flow channel 4. The fifth group of flow channels 370 is located downstream of the fourth group of flow channels 360, and the sum of cross-sectional areas of the fifth group of flow channels 370 is greater than the sum of cross-sectional areas of the fourth group of flow channels 360. This can increase the flow rate of liquid flowing out from the fourth main flow channel 4, and reduce the difference between the liquid flow rate in the third main flow channel 3 and the liquid flow rate in the fourth main flow channel 4. As a result, distribution of the liquid flow rates to the third main flow channel 3 and the fourth main flow channel 4 becomes more uniform, thereby further improving the flow uniformity of the thermal management component 300, enhancing the heat exchange effect of the thermal management component 300, boosting the cycling performance of the battery cells 10, and increasing the reliability of the battery 100.

Referring to FIGs. 4 and 5, in some embodiments, the first main flow channel 1, the second main flow channel 2, the third main flow channel 3, and the fourth main flow channel 4 are arranged in sequence along the first direction Y.

For example, the first main flow channel 1, the second main flow channel 2, the third main flow channel 3, and the fourth main flow channel 4 all extend in a straight line along the second direction X with equal extension lengths, and the first main flow channel 1, the second main flow channel 2, the third main flow channel 3, and the fourth main flow channel 4 are arranged in sequence along the first.

In this embodiment, the first main flow channel 1, the second main flow channel 2, the third main flow channel 3, and the fourth main flow channel 4 are arranged in sequence along the first direction Y. This can reduce the dimensional occupation of the flow channels in the second direction X, and achieve a more compact layout of the flow channels, allowing for a thermal management component 300 with a relatively small volume, and increasing the energy density of the battery using such thermal management component.

Referring to FIGs. 4 and 5, in some embodiments, in the second direction X, the first main flow channel 1 has a first outlet end 1d opposite the first inlet end, the second main flow channel 2 has a second outlet end 2d opposite the second inlet end 2c, the third main flow channel 3 has a third inlet end 3d opposite the third outlet end 3c, and the fourth main flow channel 4 has a fourth inlet end 4d opposite the fourth outlet end 4c; and the thermal management component 300 further has a second communication flow channel 8, where the second communication flow channel 8 connects the first outlet end 1d, the second outlet end 2d, the third inlet end 3d, and the fourth inlet end 4d.

Understandably, one end of the first main flow channel 1 communicates with the second communication flow channel 8, and another end of the first main flow channel 1 communicates with the liquid inlet flow channel 330 via the first group of flow channels 5. One end of the second main flow channel 2 communicates with the second communication flow channel 8, and another end of the second main flow channel 2 communicates with the liquid inlet flow channel 330 via the second group of flow channels 6. One end of the third main flow channel 3 communicates with the second communication flow channel 8, and another end of the third main flow channel 3 communicates with the liquid outlet flow channel 340 via the fourth group of flow channels 360. One end of the fourth main flow channel 4 communicates with the second communication flow channel 8, and another end of the fourth main flow channel 4 communicates with the liquid outlet flow channel 340 via the fifth group of flow channels 370.

In this embodiment, the first outlet end 1d, the second outlet end 2d, the third inlet end 3d, and the fourth inlet end 4d are separately in communication with the second communication flow channel 8, so that the second communication flow channel 8 can gather liquid flowing out from the first main flow channel 1 and the second main flow channel 2 and divert the liquid to the third main flow channel 3 and the fourth main flow channel 4, thereby balancing the liquid flow rates in the first main flow channel 1, the second main flow channel 2, the third main flow channel 3, and the fourth main flow channel 4. This further improves the flow uniformity of the thermal management component 300, enhances the heat exchange effect of the thermal management component 300, boosts the cycling performance of the battery cells 10, and increases the reliability of the battery 100.

In some embodiments, the second communication flow channel 8 extends along the first direction.

In some embodiments, the thermal management component 300 has a liquid outlet port 320, where the liquid outlet port 320 is provided at one end of the liquid outlet flow channel 340.

It should be understood that the fifth group of flow channels 370 is located downstream of the fourth group of flow channels 360, and the liquid outlet port 320 is located downstream of the fifth group of flow channels 370.

Referring to FIGs. 9 and 10, in some embodiments, the thermal management component 300 further has a third communication flow channel 9, where along the first direction Y, the third communication flow channel 9 is disposed between the third outlet end 3c and the fourth outlet end 4c, and separately communicates with the third outlet end 3c and the fourth outlet end 4c.

For example, as shown in FIGs. 9 and 10, the third communication flow channel 9 is located between the third main flow channel 3 and the fourth main flow channel 4, and the third communication flow channel 9 extends in a straight line along the first direction Y.

In this embodiment, the third communication flow channel 9 is in communication with the third outlet end 3c and the fourth outlet end 4c. It can be understood that in addition to the fourth group of flow channels 360, the third communication flow channel 9 can also export liquid from the third main flow channel 3. This can further reduce the flow resistance, alleviate the pressure drop of liquid, and increase the total liquid flow rate in thermal management, thereby improving the heat exchange effect of the thermal management component 300.

Referring to FIGs. 10 and 11, in some embodiments, the thermal management component 300 further has a sixth group of flow channels 380, where the sixth group of flow channels 380 includes at least one sixth branch flow channel 380a, and the third communication flow channel 9 is in communication with the liquid outlet flow channel 340 via the sixth group of flow channels 380; and along the second direction X, a projection of the sixth group of flow channels 380 falls within a projection of the third communication flow channel 9.

Understandably, the sixth group of flow channels 380 connects the third communication flow channel 9 to the liquid outlet flow channel 340, and the sixth group of flow channels 380 can export liquid from the third communication flow channel 9. With addition of the sixth group of flow channels 380, some of the liquid in the third main flow channel 3 can enter the sixth group of flow channels 380, and some of the liquid in the fourth main flow channel 4 can also enter the sixth group of flow channels 380.

The sixth branch flow channel 380a may be provided in one or in plurality. For example, in FIGs. 11 and 12, one sixth branch flow channel 380a is provided.

For example, as shown in FIGs. 11 and 12, one sixth branch flow channel 380a is provided, the sixth group of flow channels 380 extends along the second direction X, and the second group of flow channels 6, the fourth group of flow channels 360, and the fifth group of flow channels 370 are parallel to each other.

In this embodiment, the third communication flow channel 9 is in communication with the liquid outlet flow channel 340 via the sixth group of flow channels 380, and the sixth group of flow channels 380 can export liquid from the third communication flow channel 9. This can further reduce the flow resistance, alleviate the pressure drop of liquid, and increase the total liquid flow rate in thermal management, thereby improving the heat exchange effect of the thermal management component 300. In addition, this can also alleviate the occurrence of backflow and turbulence caused by liquid backflowing into the fourth main flow channel 4 due to the high flow rate and excessively fast flow velocity of the liquid in the third main flow channel 3.

Backflow refers to a phenomenon that liquid in the third main flow channel 3 flows out from the third outlet end 3c but cannot be discharged promptly, and thus enters the fourth main flow channel 4 via the fourth outlet end 4c.

In some embodiments, a sum of cross-sectional areas of the sixth group of flow channels 380 is greater than the sum of cross-sectional areas of the fourth group of flow channels 360, and the sum of cross-sectional areas of the sixth group of flow channels 380 is less than the sum of cross-sectional areas of the fifth group of flow channels 370.

If one sixth branch flow channel 380a is provided, the cross-sectional area of the sixth branch flow channel 380a is the sum of cross-sectional areas of the sixth group of flow channels 380. If a plurality of sixth branch flow channels 380a are provided, the sum of cross-sectional areas of the plurality of sixth branch flow channels 380a is the sum of cross-sectional areas of the sixth group of flow channels 380.

The cross-sectional area of the sixth branch flow channel 380a can be measured using the same measurement method as that for the first branch flow channel 5a and the second branch flow channel 6a. For brevity, details are not repeated herein.

In this embodiment, the cross-sectional area of the fourth group of flow channels, the cross-sectional area of the sixth group of flow channels, and the cross-sectional area of the fifth group of flow channels increase sequentially, so that along the liquid flow direction S2 in the liquid outlet flow channel, the resistance experienced by the liquid decreases sequentially. This helps increase the liquid flow rate in the thermal management component 300, and helps improve the flow uniformity of the thermal management component 300, thereby improving the heat exchange effect of the thermal management component 300.

Referring to FIG. 4, in some embodiments, along the liquid flow direction S2 in the liquid outlet flow channel, the liquid outlet flow channel 340 includes a second upstream section 340a located upstream of the fifth group of flow channels 370 and a second downstream section 340b located downstream of the fifth group of flow channels 370, where the fourth group of flow channels 360 is connected to the second upstream section 340a, and a cross-sectional area of the second upstream section 340a is greater than the sum of cross-sectional areas of the fourth group of flow channels 360.

Understandably, the cross-sectional area of the second upstream section 340a is greater than the sum of cross-sectional areas of the fourth group of flow channels 360, and the second upstream section 340a is larger, so liquid in the second upstream section 340a experiences less pressure.

The second upstream section 340a and the second downstream section 340b can be arranged in various forms. For example, the second upstream section 340a and the second downstream section 340b may be arranged along the first direction Y to form a straight liquid outlet flow channel 340. For another example, the second upstream section 340a and the second downstream section 340b may be arranged at an angle. In this case, the second upstream section 340a and the second downstream section 340b are arranged in a folded line, and liquid in the second upstream section 340a needs to pass through a corner to enter the second downstream section 340b, where the corner refers to a turning position between the second upstream section 340a and the second downstream section 340b. For example, as shown in FIGs. 4 and 5, the second upstream section 340a and the second downstream section 340b are arranged at an obtuse angle, which can reduce the resistance to liquid at the turn.

In this embodiment, the cross-sectional area of the second downstream section 340b is greater than the sum of cross-sectional areas of the fourth group of flow channels 360, so that compared to liquid in the fourth group of flow channels 360, liquid in the second upstream section 340a experiences less pressure, and the second upstream section 340a can alleviate the pressure drop, allowing for a thermal management component 300 with an overall smaller pressure drop. This helps improve the heat exchange effect of the thermal management component 300.

In some embodiments, a cross-sectional area of the second downstream section 340b is greater than the cross-sectional area of the second upstream section 340a, and the cross-sectional area of the second upstream section 340a is greater than the sum of cross-sectional areas of the fourth group of flow channels 360. This further alleviates the pressure drop in the thermal management component 300.

In some embodiments, the liquid outlet port 320 is provided on the second downstream section 340b, one end of the second downstream section 340b communicates with the second upstream section 340a, and another end of the second downstream section 340b communicates with the liquid outlet port 320.

Referring to FIGs. 4 and 5, in some embodiments, the third main flow channel 3 has a fifth wall 3a and a sixth wall 3b opposite each other along the first direction Y, and the third outlet end 3c is provided with a third flow disturbing member 430; where along the first direction Y, the third flow disturbing member 430 is spaced from the fifth wall 3a, and the third flow disturbing member 430 is spaced from the sixth wall 3b; and along the second direction X, the third flow disturbing member 430 is spaced from the fourth group of flow channels 360.

In a case that the thermal management component 300 is fabricated with a first plate body and a second plate body as separate parts and the second plate body covers a groove stamped on the first plate body to form a flow channel, the fifth wall 3a and the sixth wall 3b are two groove walls of the groove in a region corresponding to the third main flow channel 3, and the third flow disturbing member 430 is spaced from the two groove walls of the groove.

For convenience of description, the fifth wall 3a and the sixth wall 3b are hereinafter referred to as edges of the third main flow channel 3, and a position between the fifth wall 3a and the sixth wall 3b along the first direction Y is the middle of the third main flow channel 3. When liquid flows in the third main flow channel 3, the fifth wall 3a and the sixth wall 3b cause resistance to liquid flow, which leads to low flow velocity and low flow rate at the edges of the third main flow channel 3, a flow velocity difference between the middle of the third main flow channel 3 and the edges of the third main flow channel, and uneven liquid flow velocities in the third main flow channel 3, affecting the flow uniformity of the thermal management component 300. Therefore, the liquid flow velocity at the edges of the third main flow channel 3 needs to be increased.

In this embodiment, the third flow disturbing member 430 can divert liquid at the third outlet end 3c so that liquid first flows toward positions of the fifth wall 3a and the sixth wall 3b and thereby flows out of the third main flow channel 3, alleviating the problem of uneven liquid flow velocities in the third main flow channel 3 caused by the resistance from the fifth wall 3a and the sixth wall 3b to the liquid.

Similarly, the fourth main flow channel 4 also has the problem of uneven flow velocities. To alleviate the problem of uneven flow velocities in the fourth main flow channel 4, in some embodiments, referring to FIGs. 4 and 5, the fourth main flow channel 4 has a seventh wall 4a and an eighth wall 4b opposite each other along the first direction Y, and the fourth outlet end 4c is provided with a fourth flow disturbing member 440; where along the first direction Y, the fourth flow disturbing member 440 is spaced from the seventh wall 4a, and the fourth flow disturbing member 440 is spaced from the eighth wall 4b; and along the second direction X, the fourth flow disturbing member 440 is spaced from the fifth group of flow channels 370.

The fourth flow disturbing member 440 has the same function as the third flow disturbing member 430. For brevity, details are not repeated herein.

In this embodiment, the fourth flow disturbing member 440 can divert liquid at the fourth outlet end 4c so that liquid first flows toward positions of the seventh wall 4a and the eighth wall 4b and thereby flows out of the fourth main flow channel 4, alleviating the problem of uneven liquid flow velocities in the fourth main flow channel 4 caused by the resistance from the seventh wall 4a and the eighth wall 4b to the liquid.

An embodiment of this application further provides a battery 100, where the battery 100 includes the thermal management component 300 according to any one of the above embodiments.

An embodiment of this application further provides an electric device, where the electric device includes the battery 100 according to any one of the above embodiments, and the battery 100 is configured to supply power to the electric device.

An embodiment of this application further provides a thermal management component 300, where the thermal management component 300 has a liquid inlet port 310, a liquid outlet port 320, a liquid inlet flow channel 330, a liquid outlet flow channel 340, a first main flow channel 1, a second main flow channel 2, a third main flow channel 3, a fourth main flow channel 4, a first group of flow channels 5, a second group of flow channels 6, a third group of flow channels 350, a fourth group of flow channels 360, a fifth group of flow channels 370, a sixth group of flow channels 380, a first communication flow channel 7, a second communication flow channel 8, and a third communication flow channel 9.

The first main flow channel 1, the second main flow channel 2, the third main flow channel 3, and the fourth main flow channel 4 are arranged side by side and spaced apart along a first direction Y.

In a second direction X, the first main flow channel 1 has a first inlet end and a first outlet end 1d opposite each other, the second main flow channel 2 has an opposite second inlet end 2c and a second outlet end 2d opposite each other, the third main flow channel 3 has a third inlet end 3d and a third outlet end 3c opposite each other, and the fourth main flow channel 4 has a fourth inlet end 4d and a fourth outlet end 4c opposite each other, the second direction X being perpendicular to the first direction Y. The second communication flow channel 8 connects the first outlet end 1d, the second outlet end 2d, the third inlet end 3d, and the fourth inlet end 4d.

The first group of flow channels 5 includes at least one first branch flow channel 5a, and the first inlet end is in communication with the liquid inlet flow channel 330 via the first group of flow channels 5. The second group of flow channels 6 includes at least one second branch flow channel 6a, and the second inlet end 2c is in communication with the liquid inlet flow channel 330 via the second group of flow channels 6. Along the second direction X, a projection of the first group of flow channels 5 falls within a projection of the first inlet end, and a projection of the second group of flow channels 6 falls within a projection of the second inlet end 2c. The first communication flow channel 7 is disposed between the first inlet end and the second inlet end 2c, and separately communicates with the first inlet end and the second inlet end 2c. The third group of flow channels 350 includes at least one third branch flow channel 350a, and the first communication flow channel 7 is in communication with the liquid inlet flow channel 330 via the third group of flow channels 350; and along the second direction X, a projection of the third group of flow channels 350 falls within a projection of the first communication flow channel 7. Along a liquid flow direction S1 in the liquid inlet flow channel, the second group of flow channels 6 is located downstream of the first group of flow channels 5, the third group of flow channels 350 is located between the first group of flow channels 5 and the second group of flow channels 6, a sum of cross-sectional areas of the third group of flow channels 350 is greater than a sum of cross-sectional areas of the first group of flow channels 5, and a sum of cross-sectional areas of the third group of flow channels 350 is less than a sum of cross-sectional areas of the second group of flow channels 6.

The fourth group of flow channels 360 includes at least one fourth branch flow channel 360a, and the third outlet end 3c is in communication with the liquid outlet flow channel 340 via the fourth group of flow channels 360. The fifth group of flow channels 370 includes at least one fifth branch flow channel 370a, and the fourth outlet end 4c is in communication with the liquid outlet flow channel 340 via the fifth group of flow channels 370. Along the second direction X, a projection of the fourth group of flow channels 360 falls within a projection of the third outlet end 3c, and a projection of the fifth group of flow channels 370 falls within a projection of the fourth outlet end 4c. The sixth group of flow channels 380 includes at least one sixth branch flow channel 380a, and the third communication flow channel 9 is in communication with the liquid outlet flow channel 340 via the sixth group of flow channels 380; and along the second direction X, a projection of the sixth group of flow channels 380 falls within a projection of the third communication flow channel 9. Along a liquid flow direction S2 in the liquid outlet flow channel, the fourth group of flow channels 360 is located upstream of the fifth group of flow channels 370, the sixth group of flow channels 380 is located between the fourth group of flow channels 360 and the fifth group of flow channels 370, a sum of cross-sectional areas of the sixth group of flow channels 380 is greater than a sum of cross-sectional areas of the fifth group of flow channels 370, and a sum of cross-sectional areas of the sixth group of flow channels 380 is less than a sum of cross-sectional areas of the fifth group of flow channels 370.

The inlet section includes a first upstream section 330a and a first downstream section 330b, where along the liquid flow direction S1 in the liquid inlet flow channel, the first upstream section 330a is located upstream of the first group of flow channels 5, the first downstream section 330b is located downstream of the first group of flow channels 5, the second group of flow channels 6 is connected to the first downstream section 330b, and a cross-sectional area of the first downstream section 330b is greater than a sum of cross-sectional areas of the first group of flow channels 5. The first upstream section 330a and the first downstream section 330b are arranged at an obtuse angle.

Along the liquid flow direction S2 in the liquid outlet flow channel, the liquid outlet flow channel 340 includes a second upstream section 340a and a second downstream section 340b, where the second upstream section 340a is located upstream of the fifth group of flow channels 370, and the second downstream section 340b is located downstream of the fifth group of flow channels 370, the fourth group of flow channels 360 is connected to the second upstream section 340a, and a cross-sectional area of the second upstream section 340a is greater than a sum of cross-sectional areas of the fourth group of flow channels 360. The second upstream section 340a and the second downstream section 340b are arranged at an obtuse angle.

The liquid inlet port 310 is provided at an end of the first upstream section 330a far away from the first downstream section 330b, and the liquid outlet port 320 is provided at an end of the second downstream section 340b far away from the second upstream section 340a.

The first main flow channel 1 has a first wall 1a and a second wall 1b opposite each other along the first direction Y, and the first inlet end is provided with a first flow disturbing member 410; where along the first direction Y, the first flow disturbing member 410 is spaced from the first wall 1a, and the first flow disturbing member 410 is spaced from the second wall 1b; and along the second direction X, the first flow disturbing member 410 is spaced from the first group of flow channels 5.

The second main flow channel 2 has a third wall 2a and a fourth wall 2b opposite each other along the first direction Y, and the second inlet end 2c is provided with a second flow disturbing member 420. Along the first direction Y, the second flow disturbing member 420 is spaced from the third wall 2a, and the second flow disturbing member 420 is spaced from the fourth wall 2b. Along the second direction X, the second flow disturbing member 420 is spaced from the second group of flow channels 6.

The third main flow channel 3 has a fifth wall 3a and a sixth wall 3b opposite each other along the first direction Y, and the third outlet end 3c is provided with a third flow disturbing member 430; where along the first direction Y, the third flow disturbing member 430 is spaced from the fifth wall 3a, and the third flow disturbing member 430 is spaced from the sixth wall 3b; and along the second direction X, the third flow disturbing member 430 is spaced from the fourth group of flow channels 360.

The fourth main flow channel 4 has a seventh wall 4a and an eighth wall 4b opposite each other along the first direction Y, and the fourth inlet end 4d is provided with a fourth flow disturbing member 440; where along the first direction Y, the fourth flow disturbing member 440 is spaced from the seventh wall 4a, and the fourth flow disturbing member 440 is spaced from the eighth wall 4b; and along the second direction X, the fourth flow disturbing member 440 is spaced from the fifth group of flow channels 370.

Referring to FIG. 4, a plurality of fifth flow disturbing members 450 are further provided in the first main flow channel 1, the second main flow channel 2, the third main flow channel 3, the fourth main flow channel 4, and the second communication flow channel 8, and the plurality of fifth flow disturbing members 450 are arranged in sequence along the liquid flow direction, improving the flow uniformity of the thermal management component 300.

In this embodiment, the sum of cross-sectional areas of the third group of flow channels 350 is greater than the sum of cross-sectional areas of the first group of flow channels 5, and the sum of cross-sectional areas of the third group of flow channels 350 is less than the sum of cross-sectional areas of the second group of flow channels 6, which can balance the flow rates of the first main flow channel 1 and the second main flow channel 2 and alleviate the pressure drop near the liquid inlet flow channel 330, thereby improving the flow uniformity and reliability of the thermal management component 300. The sum of cross-sectional areas of the sixth group of flow channels 380 is greater than the sum of cross-sectional areas of the fourth group of flow channels 360, and the sum of cross-sectional areas of the sixth group of flow channels 380 is less than the sum of cross-sectional areas of the fifth group of flow channels 370, which can balance the flow rates of the third main flow channel 3 and the fourth main flow channel 4 and alleviate the pressure drop near the liquid outlet flow channel 340, thereby improving the flow uniformity and reliability of the thermal management component 300. The first flow disturbing member 410 can balance the flow velocities at the edges and middle of the first main flow channel 1, the second flow disturbing member 420 can balance the flow velocities at the edges and middle of the second main flow channel 2, the third flow disturbing member 430 can balance the flow velocities at the edges and middle of the third main flow channel 3, and the fourth flow disturbing member 440 can balance the flow velocities at the edges and middle of the fourth main flow channel 4, further improving the flow uniformity and reliability of the thermal management component 300.

It should be noted that in the case of no conflict, the embodiments in this application and the features in the embodiments may be combined with each other.

The above embodiments are merely used to illustrate the technical solutions of this application and are not intended to limit this application. For those skilled in the art, various modifications and variations can be made to this application. Any modification, equivalent replacement, improvement, and the like made within the spirit and principles of this application shall fall within the protection scope of this application.

## Claims

1. A thermal management component, **characterized in that** the thermal management component has a liquid inlet flow channel, a first group of flow channels, a second group of flow channels, a first main flow channel, and a second main flow channel; wherein
the first main flow channel and the second main flow channel are arranged side by side and spaced apart along a first direction;
in a second direction, the first main flow channel has a first inlet end, and the second main flow channel has a second inlet end, the second direction intersecting the first direction;
the first group of flow channels comprises at least one first branch flow channel, and the first inlet end is in communication with the liquid inlet flow channel via the first group of flow channels;
the second group of flow channels comprises at least one second branch flow channel, and the second inlet end is in communication with the liquid inlet flow channel via the second group of flow channels; and
along the second direction, a projection of the first group of flow channels falls within a projection of the first inlet end, and a projection of the second group of flow channels falls within a projection of the second inlet end;
wherein along a liquid flow direction in the liquid inlet flow channel, the second group of flow channels is located downstream of the first group of flow channels, and a sum of cross-sectional areas of the second group of flow channels is greater than a sum of cross-sectional areas of the first group of flow channels.

2. The thermal management component according to claim 1, **characterized in that** the first branch flow channel is provided in a quantity of one, the second branch flow channel is provided in a quantity of one, and a cross-sectional area of the second branch flow channel is greater than a cross-sectional area of the first branch flow channel.

3. The thermal management component according to claim 2, **characterized in that** along the first direction, a width of the first branch flow channel is W₁, and a width of the second branch flow channel is W₂, satisfying 10 mm ≤ W₁ ≤ 20 mm, and 15 mm ≤ W₂ ≤ 25 mm.

4. The thermal management component according to claim 1, **characterized in that** the first branch flow channel is provided in plurality, the plurality of first branch flow channels are spaced apart along the first direction, the second branch flow channel is provided in a quantity of one, and a cross-sectional area of the second branch flow channel is greater than a sum of cross-sectional areas of all the first branch flow channels.

5. The thermal management component according to claim 1, **characterized in that** the first branch flow channel is provided in a quantity of one, the second branch flow channel is provided in plurality, the plurality of second branch flow channels are spaced apart along the first direction, and a sum of cross-sectional areas of all the second branch flow channels is greater than a cross-sectional area of the first branch flow channel.

6. The thermal management component according to claim 1, **characterized in that** the first branch flow channel is provided in plurality, the plurality of first branch flow channels are spaced apart along the first direction; the second branch flow channel is provided in plurality, the plurality of second branch flow channels are spaced apart along the first direction, and a sum of cross-sectional areas of all the second branch flow channels is greater than a sum of cross-sectional areas of all the first branch flow channels.

7. The thermal management component according to any one of claims 1 to 6, **characterized in that** the thermal management component further has a liquid inlet port, wherein the liquid inlet port is provided at one end of the liquid inlet flow channel.

8. The thermal management component according to any one of claims 1 to 7, **characterized in that** the thermal management component further has a first communication flow channel, wherein along the first direction, the first communication flow channel is disposed between the first inlet end and the second inlet end, and separately communicates with the first inlet end and the second inlet end.

9. The thermal management component according to claim 8, **characterized in that** the thermal management component further has a third group of flow channels, wherein the third group of flow channels comprises at least one third branch flow channel, and the first communication flow channel is in communication with the liquid inlet flow channel via the third group of flow channels; and
along the second direction, a projection of the third group of flow channels falls within a projection of the first communication flow channel.

10. The thermal management component according to claim 9, **characterized in that** a sum of cross-sectional areas of the third group of flow channels is greater than the sum of cross-sectional areas of the first group of flow channels, and the sum of cross-sectional areas of the third group of flow channels is less than the sum of cross-sectional areas of the second group of flow channels.

11. The thermal management component according to any one of claims 1 to 10, **characterized in that** along the liquid flow direction in the liquid inlet flow channel, the liquid inlet flow channel comprises a first upstream section located upstream of the first group of flow channels and a first downstream section located downstream of the first group of flow channels, the second group of flow channels is connected to the first downstream section, and a cross-sectional area of the first downstream section is greater than the sum of cross-sectional areas of the first group of flow channels.

12. The thermal management component according to claim 11, **characterized in that** a width of the first downstream section is W₃, satisfying 15 mm ≤ W₃ ≤ 25 mm.

13. The thermal management component according to claim 11 or 12, **characterized in that** the first downstream section extends along the first direction.

14. The thermal management component according to any one of claims 11 to 13, **characterized in that** the first upstream section is inclined relative to the first downstream section.

15. The thermal management component according to any one of claims 1 to 14, **characterized in that** the first main flow channel has a first wall and a second wall opposite each other along the first direction, and the first inlet end is provided with a first flow disturbing member; wherein
along the first direction, the first flow disturbing member is spaced from the first wall, and the first flow disturbing member is spaced from the second wall; and
along the second direction, the first flow disturbing member is spaced from the first group of flow channels.

16. The thermal management component according to any one of claims 1 to 15, **characterized in that** the second main flow channel has a third wall and a fourth wall opposite each other along the first direction, and the second inlet end is provided with a second flow disturbing member; wherein
along the first direction, the second flow disturbing member is spaced from the third wall, and the second flow disturbing member is spaced from the fourth wall; and
along the second direction, the second flow disturbing member is spaced from the second group of flow channels.

17. The thermal management component according to any one of claims 1 to 16, **characterized in that** the thermal management component further has a liquid outlet flow channel, a fourth group of flow channels, a fifth group of flow channels, a third main flow channel, and a fourth main flow channel; wherein
the third main flow channel and the fourth main flow channel are arranged side by side and spaced apart along the first direction;
in the second direction, the third main flow channel has a third outlet end, and the fourth main flow channel has a fourth outlet end;
the fourth group of flow channels comprises at least one fourth branch flow channel, and the third outlet end is in communication with the liquid outlet flow channel via the fourth group of flow channels;
the fifth group of flow channels comprises at least one fifth branch flow channel, and the fourth outlet end is in communication with the liquid outlet flow channel via the fifth group of flow channels; and
along the second direction, a projection of the fourth group of flow channels falls within a projection of the third outlet end, and a projection of the fifth group of flow channels falls within a projection of the fourth outlet end;
wherein along a liquid flow direction in the liquid outlet flow channel, the fourth group of flow channels is located upstream of the fifth group of flow channels, and a sum of cross-sectional areas of the fourth group of flow channels is greater than a sum of cross-sectional areas of the fifth group of flow channels.

18. The thermal management component according to claim 17, **characterized in that** the first main flow channel, the second main flow channel, the third main flow channel, and the fourth main flow channel are arranged in sequence along the first direction.

19. The thermal management component according to claim 17 or 18, **characterized in that** in the second direction, the first main flow channel has a first outlet end opposite the first inlet end, the second main flow channel has a second outlet end opposite the second inlet end, the third main flow channel has a third inlet end opposite the third outlet end, and the fourth main flow channel has a fourth inlet end opposite the fourth outlet end; and
the thermal management component further has a second communication flow channel, wherein the second communication flow channel connects the first outlet end, the second outlet end, the third inlet end, and the fourth inlet end.

20. The thermal management component according to any one of claims 17 to 19, **characterized in that** the thermal management component further has a liquid outlet port, wherein the liquid outlet port is provided at one end of the liquid outlet flow channel.

21. The thermal management component according to any one of claims 17 to 20, **characterized in that** the thermal management component further has a third communication flow channel, wherein along the first direction, the third communication flow channel is disposed between the third outlet end and the fourth outlet end, and separately communicates with the third outlet end and the fourth outlet end.

22. The thermal management component according to claim 21, **characterized in that** the thermal management component further has a sixth group of flow channels, wherein the sixth group of flow channels comprises at least one sixth branch flow channel, and the third communication flow channel is in communication with the liquid outlet flow channel via the sixth group of flow channels; and
along the second direction, a projection of the sixth group of flow channels falls within a projection of the third communication flow channel.

23. The thermal management component according to claim 22, **characterized in that** a sum of cross-sectional areas of the sixth group of flow channels is greater than the sum of cross-sectional areas of the fourth group of flow channels, and the sum of cross-sectional areas of the sixth group of flow channels is less than the sum of cross-sectional areas of the fifth group of flow channels.

24. The thermal management component according to any one of claims 17 to 23, **characterized in that** along the liquid flow direction in the liquid outlet flow channel, the liquid outlet flow channel comprises a second upstream section located upstream of the fifth group of flow channels and a second downstream section located downstream of the fifth group of flow channels, wherein the fourth group of flow channels is connected to the second upstream section, and a cross-sectional area of the second upstream section is greater than the sum of cross-sectional areas of the fourth group of flow channels.

25. The thermal management component according to any one of claims 17 to 24, **characterized in that** the third main flow channel has a fifth wall and a sixth wall opposite each other along the first direction, and the third outlet end is provided with a third flow disturbing member; wherein
along the first direction, the third flow disturbing member is spaced from the fifth wall, and the third flow disturbing member is spaced from the sixth wall; and
along the second direction, the third flow disturbing member is spaced from the fourth group of flow channels.

26. The thermal management component according to any one of claims 17 to 25, **characterized in that** the fourth main flow channel has a seventh wall and an eighth wall opposite each other along the first direction, and the fourth outlet end is provided with a fourth flow disturbing member; wherein
along the first direction, the fourth flow disturbing member is spaced from the seventh wall, and the fourth flow disturbing member is spaced from the eighth wall; and
along the second direction, the fourth flow disturbing member is spaced from the fifth group of flow channels.

27. A battery, **characterized by** comprising the thermal management component according to any one of claims 1 to 26.

28. An electric device, **characterized by** comprising the battery according to claim 27.
